# EUROPEAN PATENT APPLICATION

(11) **EP 3 553 595 A1**
(43) Date of publication of application: **16.10.2019**
(21) Application number: 17878431.0
(22) Date of filing: 08.12.2017
(51) Int. Cl.: G02F 1/13, C09K 19/56

(54) **REVERSE MODE LIQUID CRYSTAL DEVICE**

(30) Priority: 08.12.2016 JP 2016238852
(71) Applicant: JNC Corporation, Chiyoda-ku Tokyo 100-8105 (JP); JNC Petrochemical Corporation, Tokyo 100-0004 (JP)
(72) Inventor: TANABE Mayumi, Ichihara-shi Chiba 290-8551 (JP); MATSUMURA Yoshinari, Ichihara-shi Chiba 290-8551 (JP); FUJITA Hiroaki, Ichihara-shi Chiba 290-8551 (JP)
(74) Representative: Becker Kurig Straus
(86) International application number: PCT/JP2017/044174
(87) International publication number: WO 2018/105726

(57) **Abstract**

Provided is a reverse mode light scattering-type liquid crystal device which is good enough for practical use and has low drive voltage, and which exhibits high haze when a voltage is applied thereto, while exhibiting low haze when no voltage is applied thereto. A reverse mode liquid crystal device which has a light control layer and at least a pair of electrodes, and which is characterized in that the light control layer contains a polymerization product of a polymerizable material that contains (A) a liquid crystal composition, (B) a vertical alignment agent and (C) at least one polymerizable compound selected from among polymer-forming monomers and polymer-forming oligomers.

## Description

### Technical Field

The present invention relates to a reverse mode liquid crystal device that is transparent when no voltage is applied and is light-scattering when voltage is applied. In particular, the present invention relates to a liquid crystal device for use in a light control window and a smart window for blocking or transmitting external light or field of view, such as building windows and show windows, indoor partitions, and vehicle sunroofs and rear windows.

### Background Art

Generally, in a reverse mode light scattering type liquid crystal device, liquid crystals are aligned perpendicular to the support substrate to attain a transparent state when no voltage is applied. As means of attaining this perpendicular alignment, an alignment film made of polyimide or the like has been used. In order to form a liquid crystal alignment film on an electrode, first a solution containing a liquid crystal aligning material dissolved in an organic solvent is applied to a substrate, and then the substrate is heated to thereby remove the solvent and form the film (see Patent Literatures 1, 2, and 3). However, an alignment treatment involving use of a liquid crystal aligning film is problematic because it results in a complex process and increased costs. There are other problems in that the use of a solvent and a heat treatment limit the substrate material and cause the peeling of a sealing material by the contact between the sealed part in a cell and the alignment film.

On the other hand, concerning the commonly used liquid crystal displays that are not a light scattering type, elements have been developed in which the perpendicular alignment of liquid crystals are attained by adding a perpendicular alignment agent to liquid crystals without using an alignment film made of polyimide or the like (see Patent Literatures 4, 5, and 6).

Patent Literature 4 discloses a polymer sustained alignment (PSA) type liquid crystal display in which a LC medium containing a self-aligning additive and having negative dielectric anisotropy is used, which exhibits perpendicular alignment without a polyimide alignment film. Patent Literature 4 discloses that the temperature stability and the electro-optical switching speed of the display are improved by forming a polymeric thin film layer on a liquid crystal substrate. However, Patent Literature 4 discloses an application of such a technique to PSA-VA display, and is silent on a light-scattering type liquid crystal device as well as suitable types of materials and configurations thereof for use in the liquid crystal device, such as the technology of the present application.

Non Patent Literature 1 discloses an example of a light scattering type liquid crystal device in which a perpendicularly self-aligning liquid crystal material is used without an alignment film. However, the characteristics of the liquid crystal device produced by the method described in Non Patent Literature 1 are not sufficient, and a higher-performance liquid crystal device has been required for practical use.

According to the technique described in the present application, a reverse mode light scattering type liquid crystal device having a high contrast, high heat resistance, and high reliability can be provided by using a structure, combination, and amount to be added suitable for the liquid crystal device to withstand a broad temperature range. The perpendicular alignment agent and the polymerizable compound used in the device of the present application are highly soluble in the liquid crystal composition and thus do not undergo phase separation or crystallization in the liquid crystal material, and accordingly a liquid crystal material having high storage stability can be provided.

### Citation List

### Patent Literature

Patent Literature 1
   Japanese Patent Laid-Open No. 2003-255315
Patent Literature 2
   Re-publication of International Publication No. WO 15/022980
Patent Literature 3
   Re-publication of International Publication No. WO 15/199148
Patent Literature 4
   Japanese Patent No. 6081361
Patent Literature 5
   National Publication of International Patent Application No. 2014-513150
Patent Literature 6
   National Publication of International Patent Application No. 2016-501938

### Non Patent Literature

Non Patent Literature 1
Liquid Crystals, Vol. 43, No. 2, Pages 162-167, 2016

### Summary of Invention

### Technical Problem

An object of the present invention is to provide a reverse mode light scattering type liquid crystal device that is capable of withstanding practical use, has a low driving voltage, and shows a high haze when voltage is applied and a low haze when no voltage is applied, and also to provide such a liquid crystal device that can be produced in a high yield at low cost through a simpler process.

### Solution to Problem

As a result of having conducted diligent research to achieve the above object, the inventors found a reverse mode light scattering type liquid crystal device that achieves the above object and a configuration of materials that yields the device without using a liquid crystal alignment film, and accomplished the present invention.

In order to achieve the above object, the present invention provides the following item:
A reverse mode liquid crystal device including a light control layer and at least a pair of electrodes, wherein
the light control layer includes a polymerization product of a polymerizable material including:
   (A) a liquid crystal composition,
   (B) a perpendicular alignment agent, and
   (C) at least one polymerizable compound selected from polymer forming monomers and polymer forming oligomers.

### Advantageous Effects of Invention

The reverse mode light scattering type liquid crystal device of the present invention can be obtained without using a perpendicularly aligning film of a polymeric material such as polyimide. Moreover, the liquid crystal device has low voltage driving properties and a large difference between the hazes in a transmitting state and a scattering state , that is, high contrast.

Such a liquid crystal device can electrically control blockage or transmission of external light or the field of view, and can be used for various applications such as light control glass for blocking and transmission of external light or the field of view such as building windows and show windows, indoor partitions, and vehicle sunroofs and rear windows, as well as light guides, display devices of computer terminals, and projection display devices.

### Brief Description of Drawings

Figure 1 is a cross-sectional view showing an example of a structure of a liquid crystal device of the present invention.
Figure 2 is a cross-sectional view showing an example of the structure of the liquid crystal device of the present invention.
Figure 3 is a diagram of the curves showing the relation between the voltage applied across electrodes and the transmittance of polymer/liquid crystal composite material PDLC-A of Example.
Figure 4 is a diagram of the curves showing the relation between the voltage applied across electrodes and the transmittance of polymer/liquid crystal composite material PDLC-B of Example.

### Description of Embodiments

Embodiments of the present invention will now be described below, but the present invention is not limited to these descriptions.

A liquid crystal device of the present invention is a reverse mode liquid crystal device including a light control layer and at least a pair of electrodes, wherein
the light control layer includes a polymerization product of a polymerizable material including:
(A) a liquid crystal composition,
(B) a perpendicular alignment agent, and
(C) at least one polymerizable compound selected from polymer forming monomers and polymer forming oligomers.

In the present invention, when the structure of a compound is shown wherein a bond indicating the structure of a ring in a chemical structural formula and a bond having a functional group in the chemical structural formula are crossed with each other, it indicates both a compound in which hydrogen atoms of the ring are not replaced with the functional groups and a compound in which any of hydrogen atoms of the ring are replaced with the functional groups.

In the present invention, when a compound having a ring structure with two bonding moieties is shown in a chemical structural formula, the compound shall be understood to include a compound obtained by interchanging one bonding moiety with the other bonding moiety.

### Perpendicular alignment agent

Herein, the "perpendicular alignment agent" is a compound that, when contained in liquid crystals, causes the liquid crystals to be aligned at an angle of 70 degrees to 90 degrees relative to a substrate, that is, imparts perpendicular alignment properties in a liquid crystal state.

In the liquid crystal device of the present invention, increased perpendicular alignment properties need to be imparted to the liquid crystals in order to reduce the haze rate in a transmitting state. For this purpose, the perpendicular alignment agent is preferably an organic compound having a polar group at a molecular terminal thereof and having 8 or more carbon atoms, and is more preferably an organic compound having 10 or more carbon atoms. The content thereof is preferably 0.1 weight% or more and more preferably 0.5 weight% or more based on the entirety of the materials of the light control layer. On the other hand, an excessive content of the perpendicular alignment agent results in crystallization and the like and, in turn, reduces the haze rate, and accordingly the content is preferably 10 weight% or less, and more preferably 5 weight% or less.

Examples of the polar group at a molecular terminal of the perpendicular alignment agent include -OR², -N(R²R³)₂, - COR², -CO₂R², -COOCH=CHR², -NR²COMe, -CON(R²R³)₂, -SR² (wherein R² and R³ represent a hydrogen atom or a methyl group), ammonium salts, and carboxylic acid salts. At this time, in order to impart increased perpendicular alignment properties to liquid crystals and to suppress decrease in haze rate in a transparent state resulting from precipitation of crystals or the like, -OR², -COR², or -COOCH=CHR² is preferably selected as a polar group, and -OH is more preferably selected. In the case of -N(R²R³)₂, -N(R²R³)₂ that is substituted on an aromatic compound is preferably used to suppress formation of a salt with acidic gas in air or reaction with other acrylic monomers. In the present invention, the non-polymerizable perpendicular alignment agent shown below preferably has a polar group at one molecular terminal for perpendicular alignment, and at least one of -OH and -N(R²)₂ (wherein R² represents a hydrogen atom or a methyl group) is preferable as a polar group, and -OH is more preferable. The polymerizable perpendicular alignment agent preferably has - OH or -COOCH=CHR² as a polar group at a molecular terminal, and may have -OH or -COOCH=CHR² at both molecular terminals. Moreover, a perpendicular alignment agent having OH solely as a polar group is preferable.

In the present invention, a non-polymerizable perpendicular alignment agent is preferably used as an example of the perpendicular alignment agent. Suitable examples of the non-polymerizable perpendicular alignment agents include compounds represented by Formula (P-1) to Formula (P-7) below:

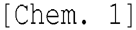

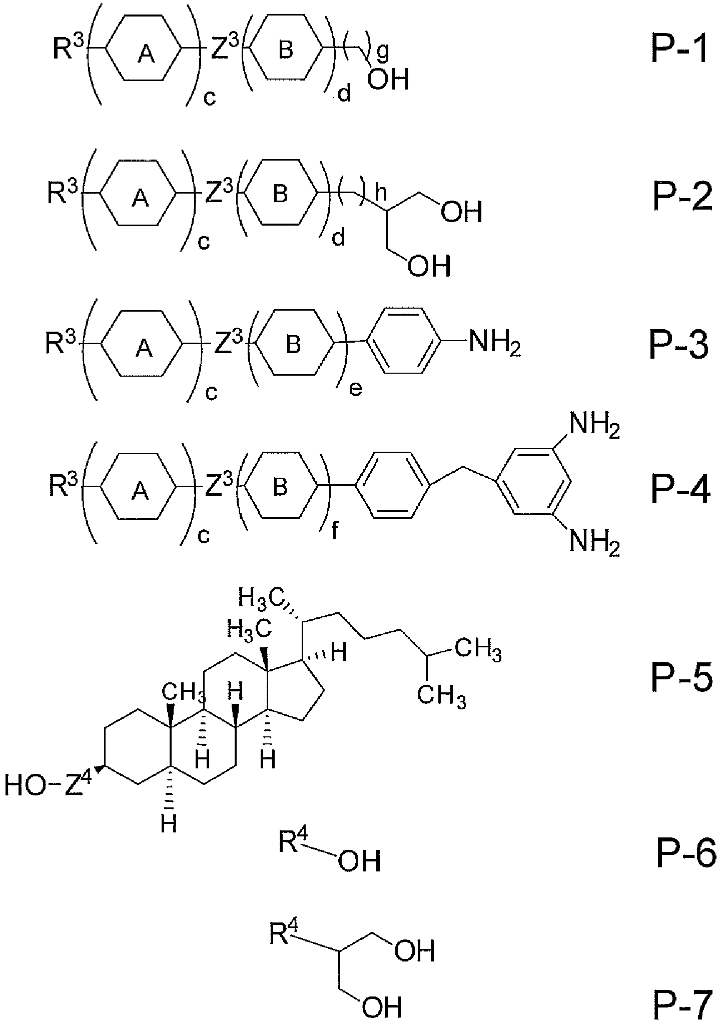

In the above Formulae, R3 is a hydrogen atom, a halogen atom, an alkyl group having 1 to 18 carbon atoms, an alkoxy group having 1 to 18 carbon atoms, an alkenyl group having 2 to 18 carbon atoms, an alkyl group having 1 to 18 carbon atoms in which at least one hydrogen atom is replaced with a fluorine atom or a chlorine atom, or an alkenyl group having 2 to 18 carbon atoms in which at least one hydrogen atom is replaced with a fluorine atom or a chlorine atom;
R⁴ is a hydrogen atom, a halogen atom, an alkyl group having 8 to 18 carbon atoms, an alkenyl group having 8 to 18 carbon atoms, an alkyl group having 8 to 18 carbon atoms in which at least one hydrogen atom is replaced with a fluorine atom or a chlorine atom, or an alkenyl group having 8 to 18 carbon atoms in which at least one hydrogen atom is replaced with a fluorine atom or a chlorine atom;
ring A and ring B are independently 1,4-cyclohexylene or 1,4-phenylene, and in these rings, at least one hydrogen atom is optionally replaced with a fluorine atom, a chlorine atom, an alkyl group having 1 to 12 carbon atoms, an alkoxy group having 1 to 12 carbon atoms, or an alkyl group having 1 to 12 carbon atoms in which at least one hydrogen atom is replaced with a fluorine atom or a chlorine atom;
Z³ is a single bond or -(CH₂)₂-; Z⁴ is a single bond or an alkylene group having 1 to 6 carbon atoms, and in this alkylene group, at least one -CH₂- is optionally replaced with -O-, and at least one -(CH₂)₂- is optionally replaced with -CH=CH-;
c is 0, 1, 2, or 3; d is 0, 1, 2, or 3; c + d is 2, 3, or 4; e is 0, 1, or 2; c + e is 1, 2, or 3;
f is 0, 1, or 2; c + f is 1 or 2; g is an integer of 0 to 6; and h is an integer of 1 to 6.

In order to impart increased perpendicular alignment properties to liquid crystals and to suppress decrease in haze rate in a transparent state resulting from precipitation of crystals or the like, a compound having one OH group is more preferably selected, such as Formula (P-1), Formula (P-5), or Formula (P-6) wherein R⁴ is an alkyl group having 10 or more carbon atoms.

As for the perpendicular alignment agent used in the present invention, a polymerizable perpendicular alignment agent can also be preferably used to suppress decrease in haze rate in a transparent state resulting from deterioration of perpendicular alignment properties over time. Moreover, in order to suppress decrease in haze rate in a transparent state resulting from precipitation of crystals or the like, a compound having a (meth)acrylic group as a polymerizable group is more preferable.

On the other hand, the polymerizable perpendicular alignment agent is costly and, accordingly, in order to reduce the cost of the liquid crystal device of the present invention, a non-polymerizable perpendicular alignment agent is preferably used in applications in which deterioration of performance over time is acceptable.

Specific examples of the polymerizable perpendicular alignment agent include polymerizable compounds represented by General Formulae (1) to (3).

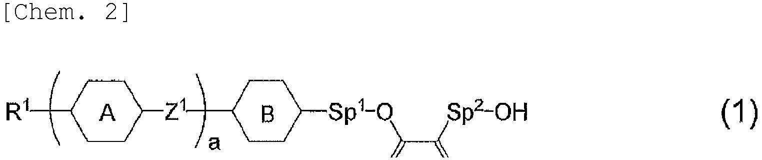

In Formula (1), R¹ is a hydrogen atom, a halogen atom, an alkyl group having 1 to 12 carbon atoms, an alkoxy group having 1 to 12 carbon atoms, an alkenyl group having 2 to 12 carbon atoms, an alkyl group having 1 to 12 carbon atoms in which at least one hydrogen atom is replaced with a fluorine atom or a chlorine atom, or an alkenyl group having 2 to 12 carbon atoms in which at least one hydrogen atom is replaced with a fluorine atom or a chlorine atom;
ring A and ring B are independently 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, tetrahydropyran-2,5-diyl, 1,3-dioxane-2,5-diyl, pyrimidine-2,5-diyl, pyridine-2,5-diyl, fluorene-2,7-diyl, phenanthrene-2,7-diyl, anthracene-2,6-diyl, perhydrocyclopenta[a]phenanthrene-3,17-diyl, or 2,3,4,7,8,9,10,11,12,13,14,15,16,17-tetradecahydrocyclopenta[a]phenanthrene-3,17-diyl, and in these rings, at least one hydrogen atom is optionally replaced with a fluorine atom, a chlorine atom, an alkyl group having 1 to 12 carbon atoms, an alkoxy group having 1 to 12 carbon atoms, or an alkyl group having 1 to 12 carbon atoms in which at least one hydrogen atom is replaced with a fluorine atom or a chlorine atom; Z¹ is a single bond, - (CH₂)₂-, -CH=CH-, -C≡C-, -COO-, -OCO-, -CF₂O-, -OCF₂-, -CH₂O-, -OCH₂-, or -CF=CF-;
Sp¹ and Sp² are independently a single bond or an alkylene group having 1 to 7 carbon atoms, in this alkylene group, at least one -CH₂- is optionally replaced with -O-, - COO-, or -OCO-, and at least one -(CH₂)₂- is optionally replaced with -CH=CH-, and in these groups, at least one hydrogen atom is optionally replaced with a fluorine atom; and
a is 0, 1, 2, 3, or 4.

Examples of compound (1) are (1-1) to (1-7).

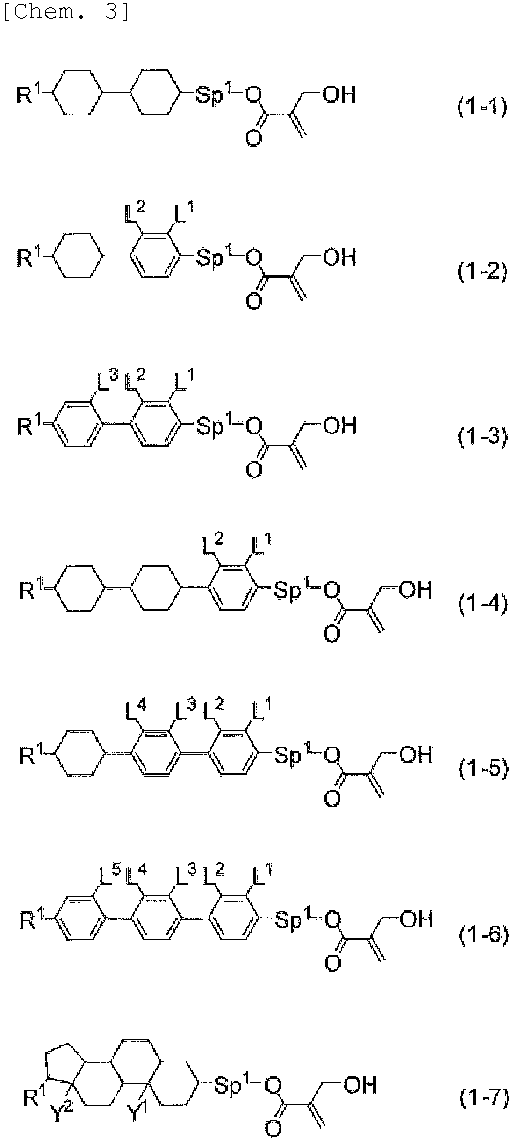

In Formula (1-1) to Formula (1-7),
R¹ is an alkyl group having 1 to 10 carbon atoms;
Sp¹ is a single bond or an alkylene group having 1 to 3 carbon atoms, and in this alkylene group, at least one -CH₂-is optionally replaced with -O-;
L¹, L², L³, L⁴, and L⁵ are independently a hydrogen atom, a fluorine atom, a methyl group, or an ethyl group; and
Y¹ and Y² are independently a hydrogen atom or a methyl group.

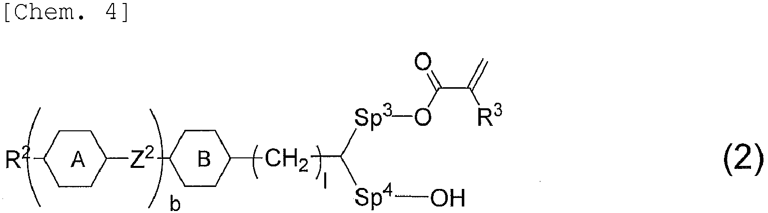

In Formula (2), R² is a hydrogen atom, a halogen atom, an alkyl group having 1 to 12 carbon atoms, an alkoxy group having 1 to 12 carbon atoms, an alkenyl group having 2 to 12 carbon atoms, an alkyl group having 1 to 12 carbon atoms in which at least one hydrogen atom is replaced with a fluorine atom or a chlorine atom, or an alkenyl group having 2 to 12 carbon atoms in which at least one hydrogen atom is replaced with a fluorine atom or a chlorine atom;
R³ is a hydrogen atom or a methyl group;
ring A and ring B are independently 1,4-cyclohexylene, 1,4-phenylene, naphthalene-2,6-diyl, tetrahydropyran-2,5-diyl, 1,3-dioxane-2,5-diyl, pyrimidin-2,5-diyl, pyridine-2,5-diyl, or fluorene-2,7-diyl, and in these rings, at least one hydrogen atom is optionally replaced with a fluorine atom, a chlorine atom, an alkyl group having 1 to 12 carbon atoms, an alkoxy group having 1 to 12 carbon atoms, or an alkyl group having 1 to 12 carbon atoms in which at least one hydrogen atom is replaced with a fluorine atom or a chlorine atom;
Z² is a single bond, -(CH₂)₂-, -CH=CH-, -C≡C-, -COO-, - OCO-, -CF₂O-, -OCF₂-, -CH₂O-, -OCH₂-, or -CF=CF-;
Sp³ and Sp⁴ are independently a single bond or an alkylene group having 1 to 7 carbon atoms, in this alkylene group, at least one -CH₂- is optionally replaced with -O-, - COO-, or -OCO-, and at least one -(CH₂)₂- is optionally replaced with -CH=CH-, and in these groups, at least one hydrogen atom is optionally replaced with a fluorine atom;
b is 0, 1, 2, or 3; and 1 is 1, 2, 3, 4, or 5.

Examples of compound (2) are (2-1) to (2-19).

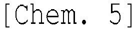

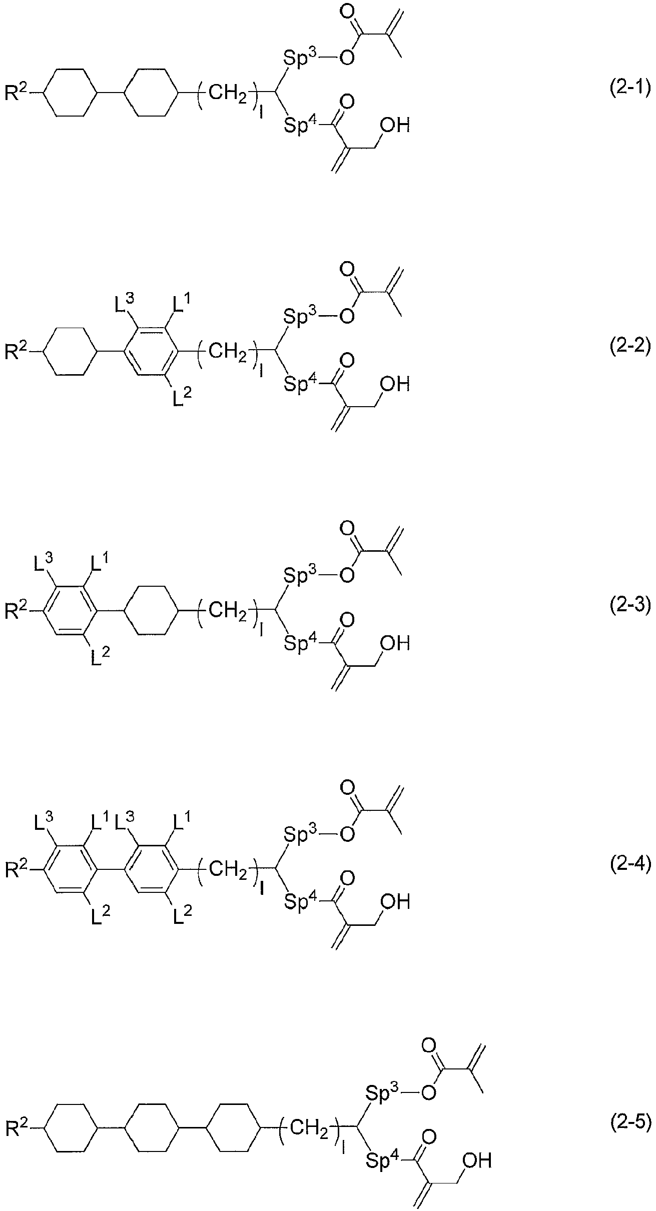

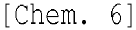

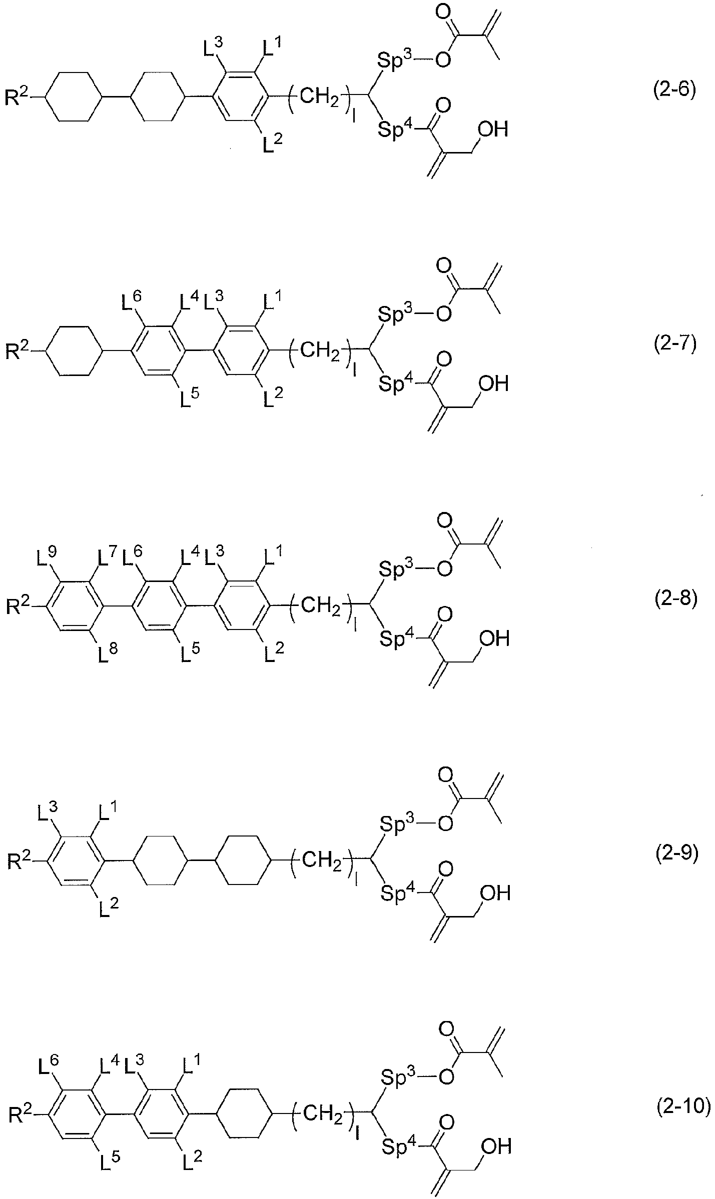

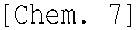

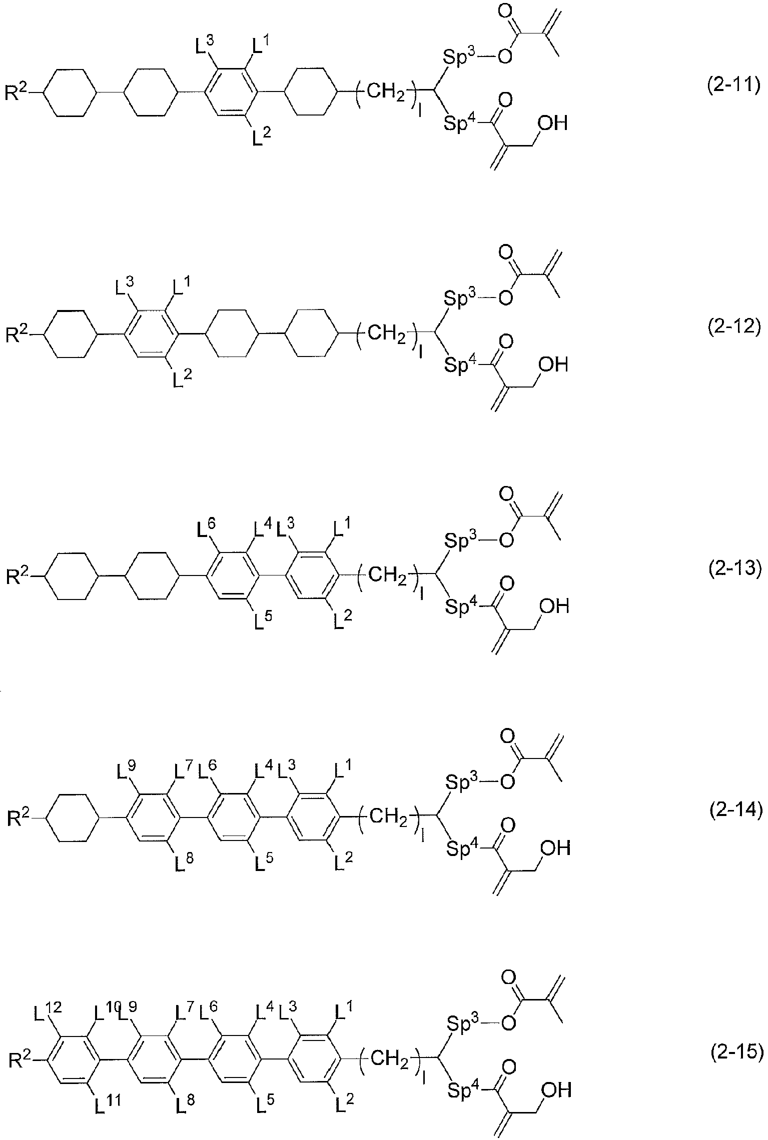

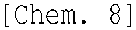

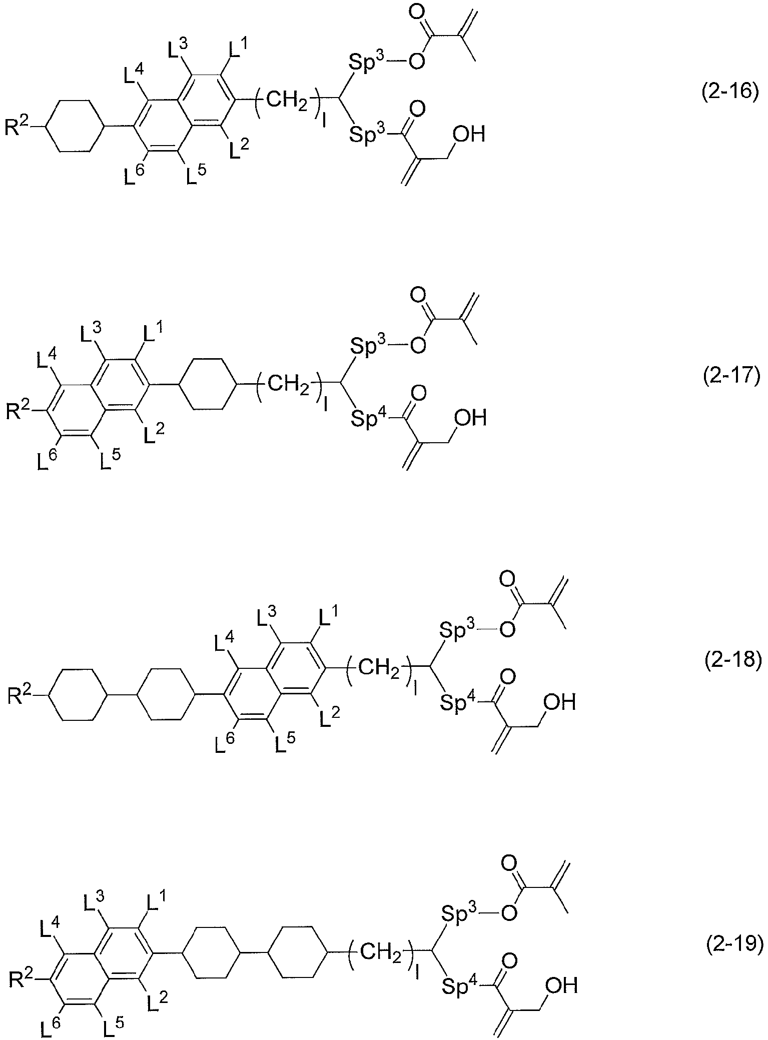

In Formula (2-1) to Formula (2-19),
R¹ is an alkyl group having 1 to 10 carbon atoms;
Sp² and Sp³ are independently an alkylene group having 1 to 3 carbon atoms, and in this alkylene group, at least one - CH₂- is optionally replaced with -O-;
L¹, L², L³, L⁴, L⁵, L⁶, L⁷, L⁸, L⁹, L¹⁰, L¹¹, and L¹² are independently a hydrogen atom, a fluorine atom, or a methyl group;
1 is 1, 2, 3, or 4; and at least one -CH₂- of this alkylene group is optionally replaced with -O-.

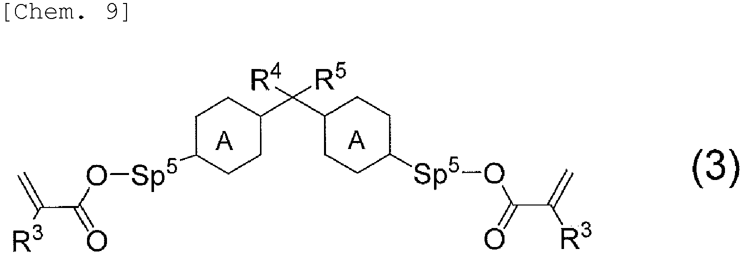

Ring A is 1,4-phenylene or naphthalene-2,6-diyl, and in these rings, at least one hydrogen atom is optionally replaced with a fluorine atom, a chlorine atom, an alkyl group having 1 to 12 carbon atoms, an alkoxy group having 1 to 12 carbon atoms, or an alkyl group having 1 to 12 carbon atoms in which at least one hydrogen atom is replaced with a fluorine atom or a chlorine atom;
R⁴ and R⁵ are each independently a hydrocarbon group having 1 to 30 carbon atoms, and R⁴ and R⁵ are optionally connected to form a cyclic structure;
Sp⁵ is a single bond or an alkoxy group having 2 to 12 carbon atoms, and a hydrogen atom of one CH₂ of this alkoxy group is optionally substituted with OH; and
R³ is a hydrogen atom or a methyl group.

As specific examples of the polymerizable perpendicular alignment agents represented by these general formulae (1) to (3), compounds described in, for example, Japanese Patent Application No. 2015-023330, Japanese Patent Application No. 2015-181370, Japanese Patent Laid-Open No. 2008-266550, Japanese Patent Laid-Open No. 2008-266632, and Japanese Patent Application No. 2016-120581 can be suitably used.

Two or more perpendicular alignment agents in the present invention may be used as a mixture. As such two perpendicular alignment agents, a combination of polymerizable and non-polymerizable perpendicular alignment agents may be selected.

### Polymerizable material

In the present invention, at least one polymerizable compound selected from polymer forming monomers and polymer forming oligomers is used. A polymerization product obtained from a polymerizable material containing the polymerizable compound forms a polymer network in the light control layer, and has an important role in increasing the haze rate when voltage is applied. Such polymer forming monomers or oligomers can be selected from all known polymer forming monomers or oligomers. Compounds represented by Formulae (6) to (8) below are preferably used to reduce the haze rate in a transmitting state and, simultaneously, increase the haze rate in a scattering state. In the present invention, the light control layer is composed of a polymerization product of a polymerizable material containing the polymerizable compound, and in the case of containing a polymerizable perpendicular alignment agent and a polymerizable liquid crystal composition together with the polymerizable compound, these may constitute the polymerization product as polymerizable materials.

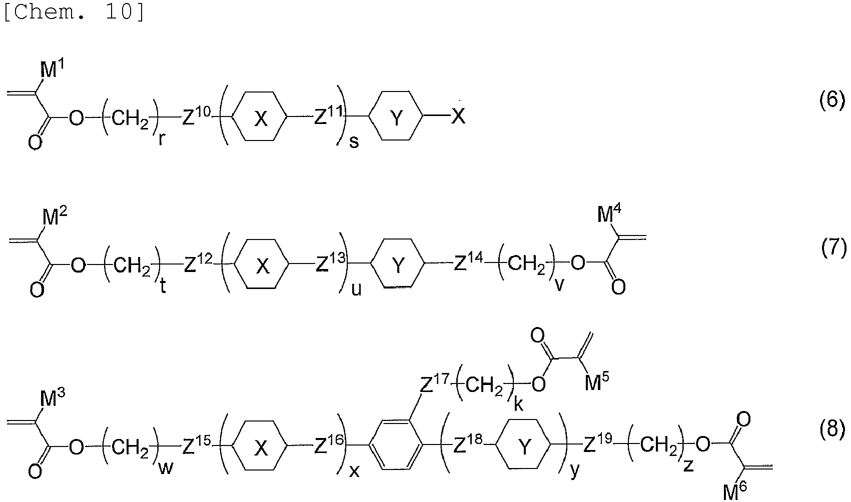

In Formula (6), Formula (7), and Formula (8), ring X and ring Y are independently 1,4-cyclohexylene, 1,4-phenylene, naphthalene-2,6-diyl, tetrahydropyran-2,5-diyl, 1,3-dioxane-2,5-diyl, pyrimidin-2,5-diyl, pyridine-2,5-diyl, or fluorene-2,7-diyl, and in these rings, at least one hydrogen atom is optionally replaced with a fluorine atom, a chlorine atom, an alkyl group having 1 to 12 carbon atoms, an alkoxy group having 1 to 12 carbon atoms, or an alkyl group having 1 to 12 carbon atoms in which at least one hydrogen atom is replaced with a fluorine atom or a chlorine atom; Z¹⁰, Z¹², Z¹⁴, Z¹⁵, and Z¹⁹ are independently a single bond, -O-, -COO-, -OCO-, or - OCOO-; Z¹¹, Z¹³, Z¹⁶, and Z¹⁸ are independently a single bond, - OCH₂-, -CH₂O-, -COO-, -OCO-, -COS-, -SCO-, -OCOO-, -CONH-, - NHCO-, -CF₂O-, -OCF₂-, -CH₂CH₂-, -CF₂CF₂-, -CH=CHCOO-, - OCOCH=CH-, -CH₂CH₂COO-, -OCOCH₂CH₂-, -CH=CH-, -N=CH-, -CH=N-, -N=C(CH₃)-, -C(CH₃)=N-, -N=N-, or -CC-; Z¹⁷ is a single bond, -O-, or -COO-; X is a hydrogen atom, a fluorine atom, a chlorine atom, a trifluoromethyl group, a trifluoromethoxy group, a cyano group, an alkyl group having 1 to 20 carbon atoms, an alkenyl group having 2 to 20 carbon atoms, an alkoxy group having 1 to 20 carbon atoms, or an alkoxycarbonyl group having 1 to 20 carbons; s and u are an integer of 1 to 3;
x and y are independently an integer of 0 to 3;
the sum of x and y is 1 to 4;
r, t, w, v, k, and z are independently an integer of 0 to 20; and
M¹ to M⁶ are independently a hydrogen atom or a methyl group.

Examples of compound (6) are Formula (6-1) to Formula (6-24).

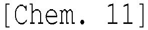

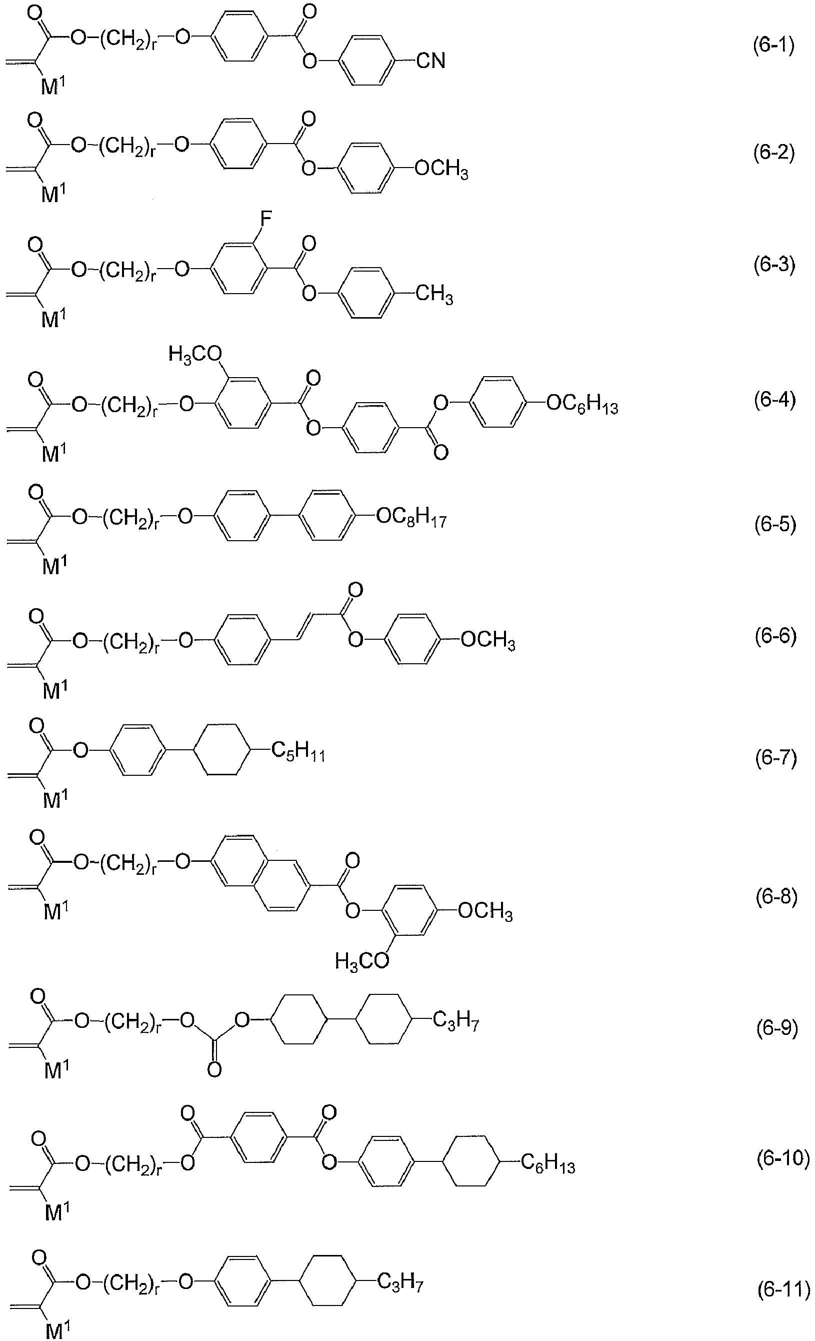

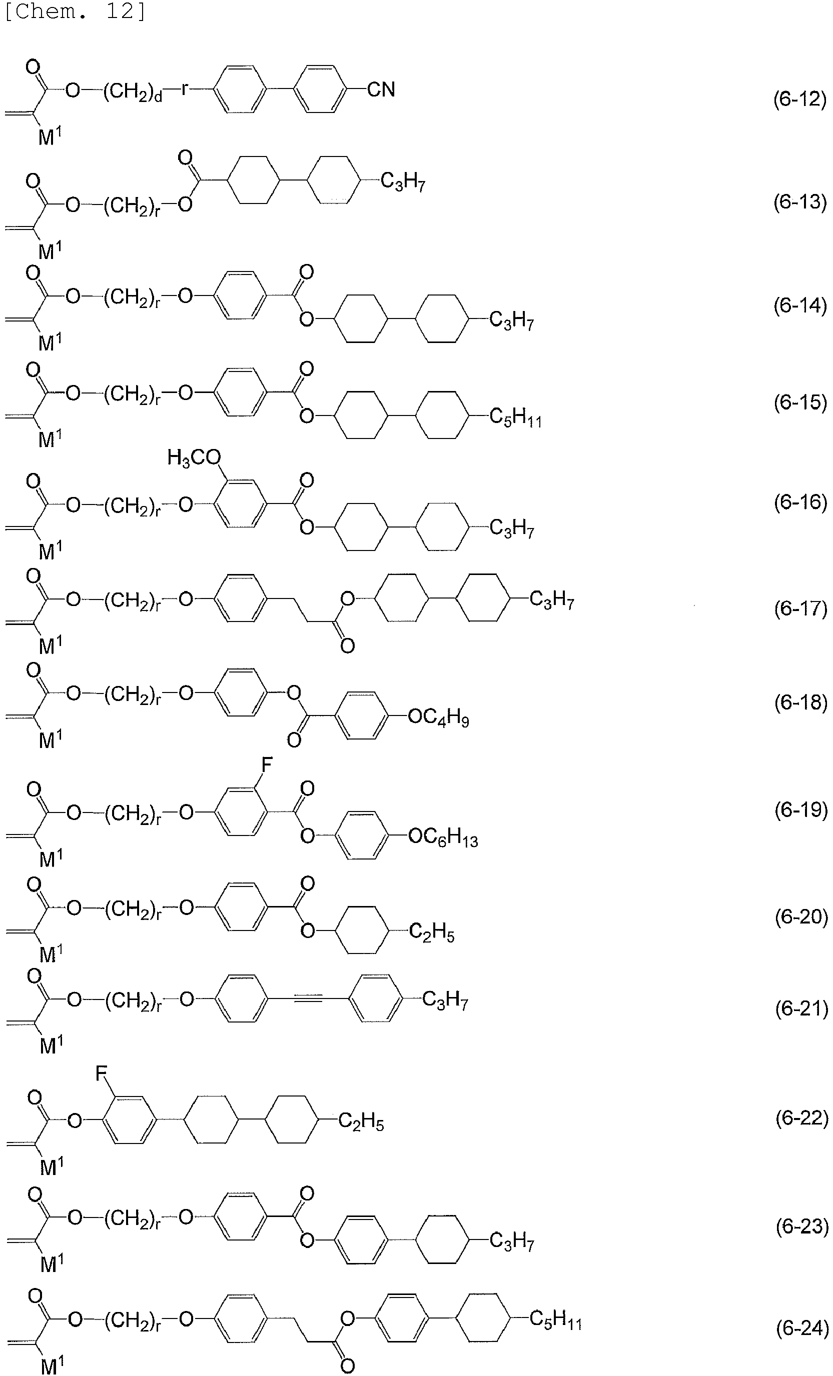

In Formula (6-1) to Formula (6-24), M¹ is a hydrogen atom or a methyl group, and r is an integer of 1 to 20.

Examples of compound (7) are Formula (7-1) to Formula (7-31).

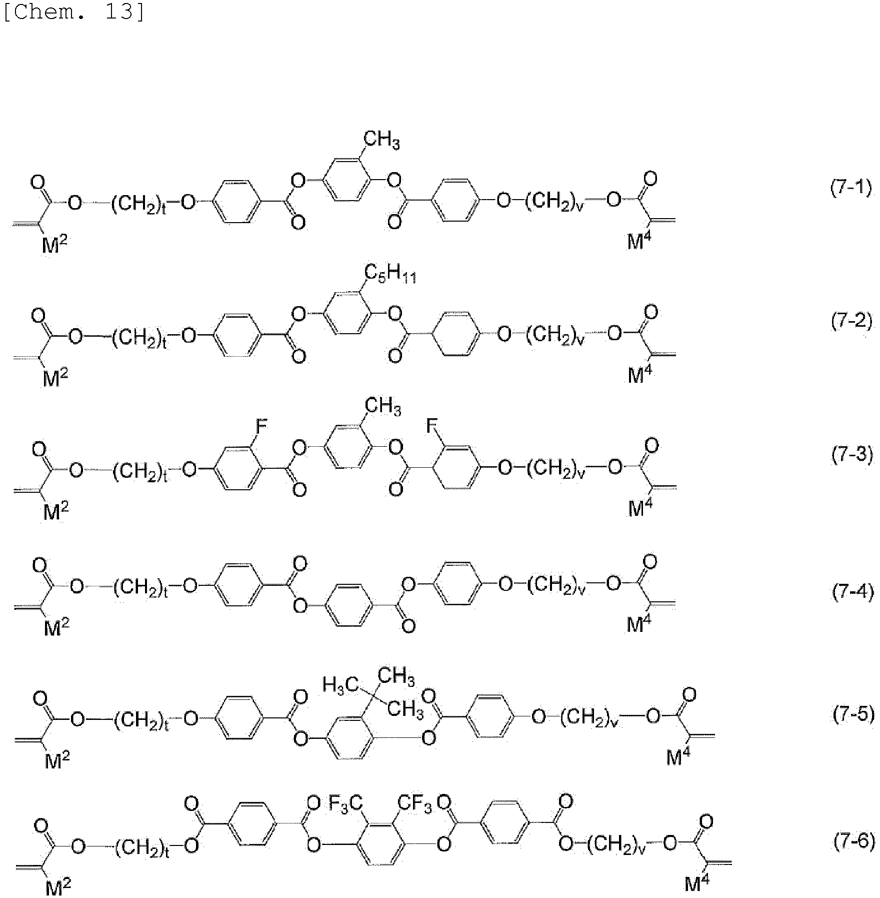

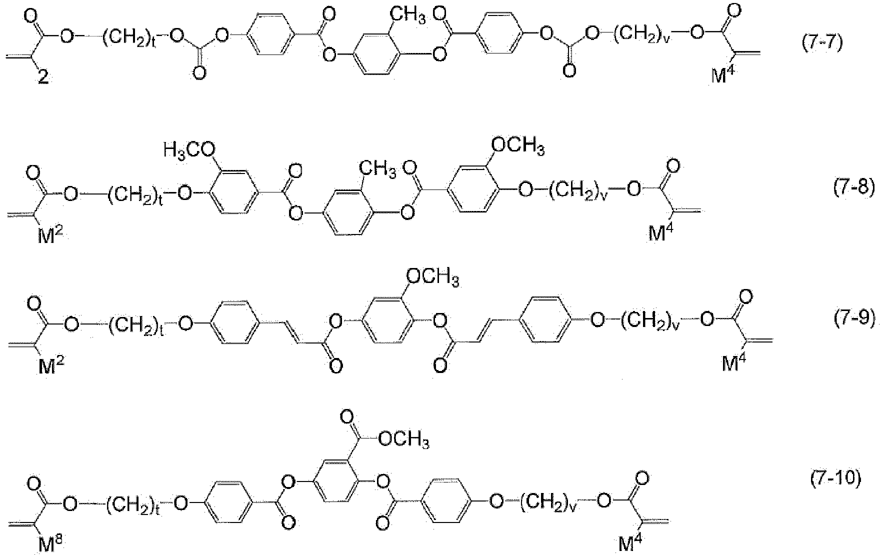

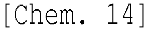

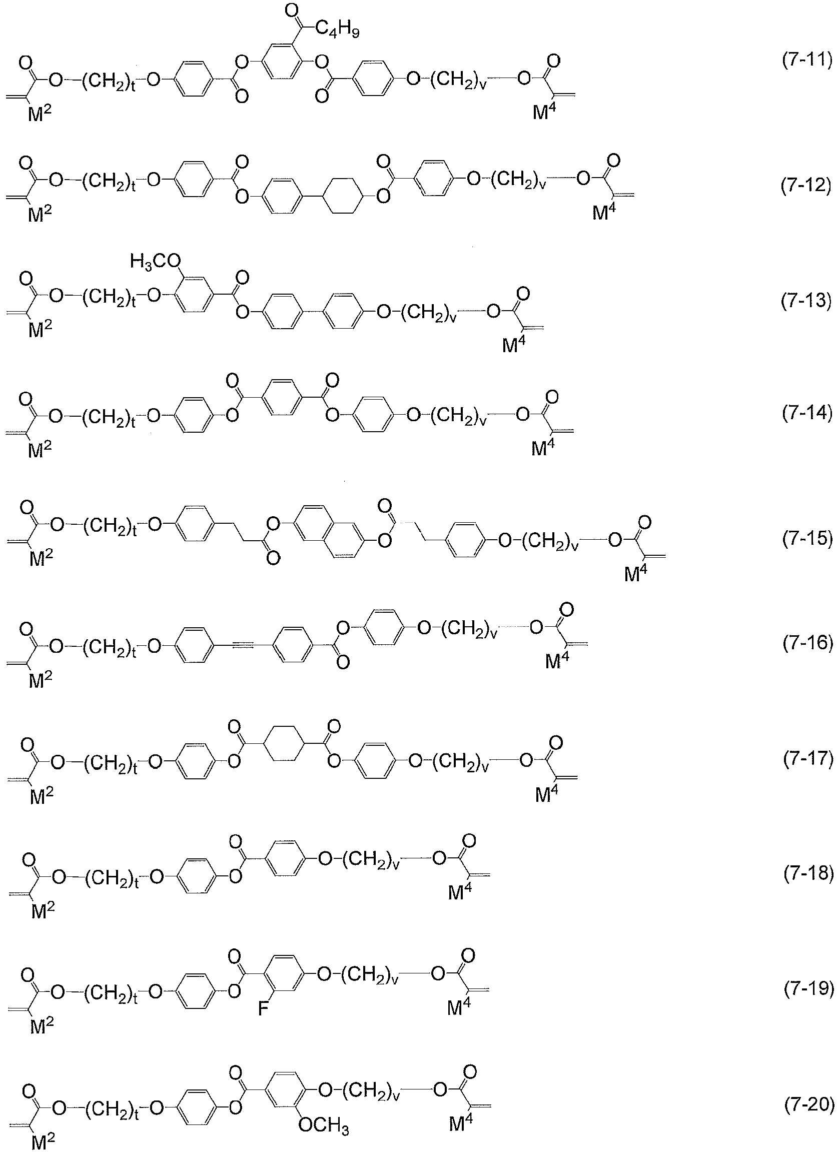

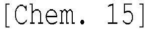

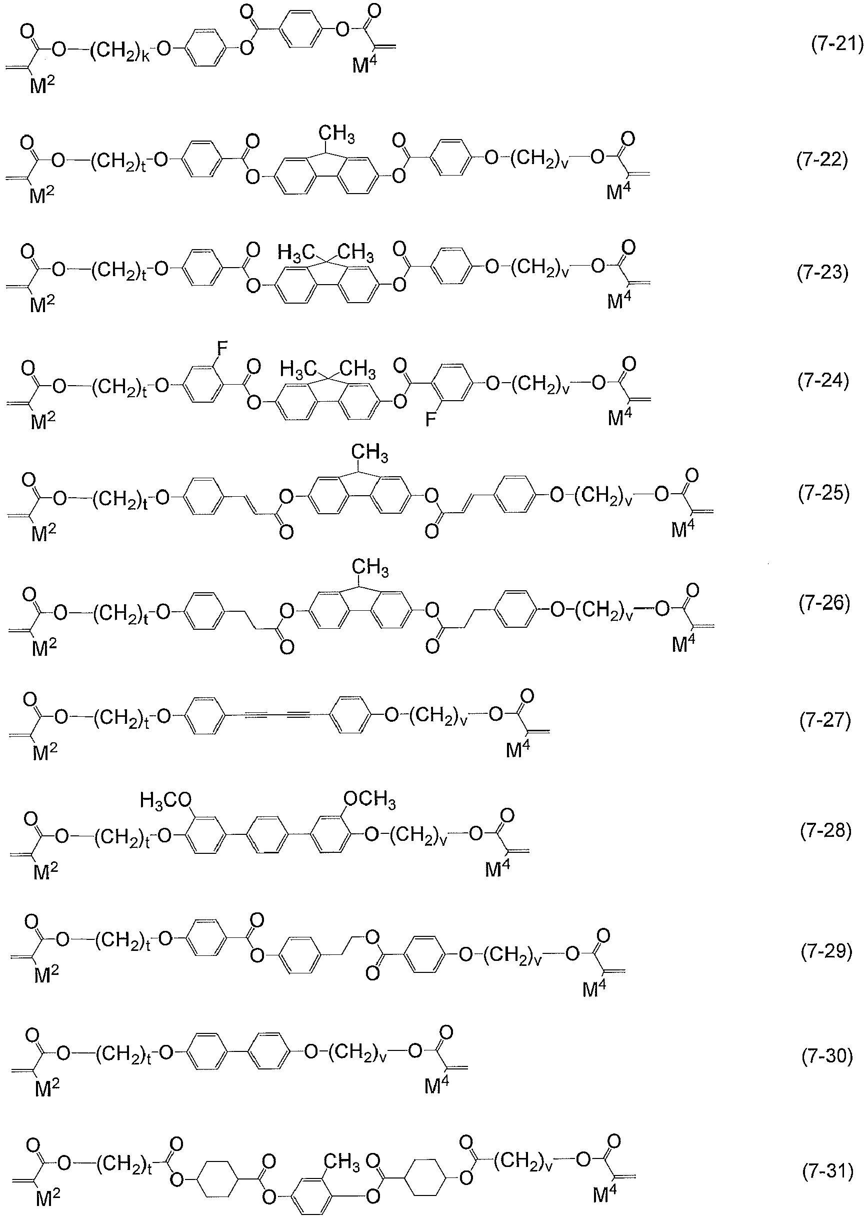

In Formula (7-1) to Formula (7-31), M² and M³ are independently a hydrogen atom or a methyl group, and t and v are independently an integer of 1 to 20. In order to prevent crystallization of the compound, increase the solubility of the liquid crystal composition, and improve the storage stability of the polymerizable material, t and v are preferably 3 or more and 16 or less, and more preferably 4 or more and 12 or less.

Examples of compound (8) are Formula (8-1) to Formula (8-10).

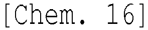

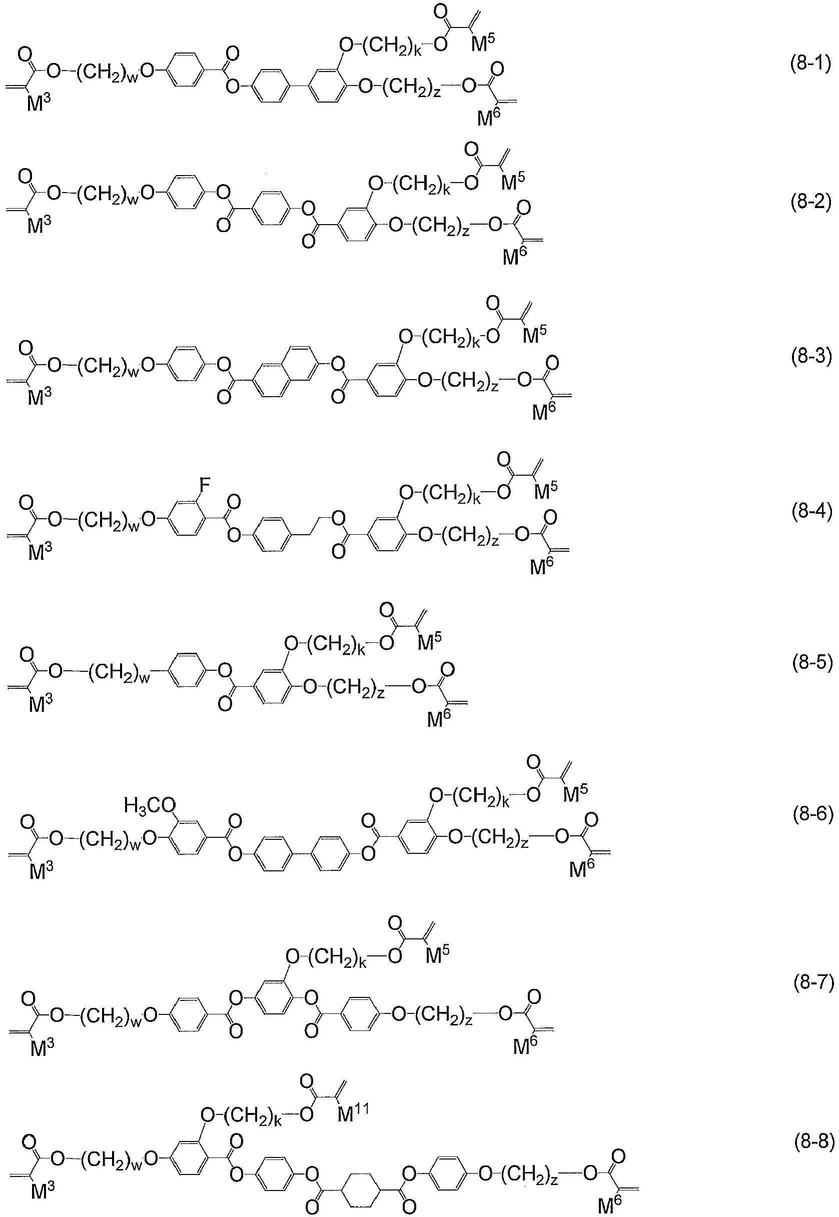

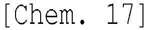

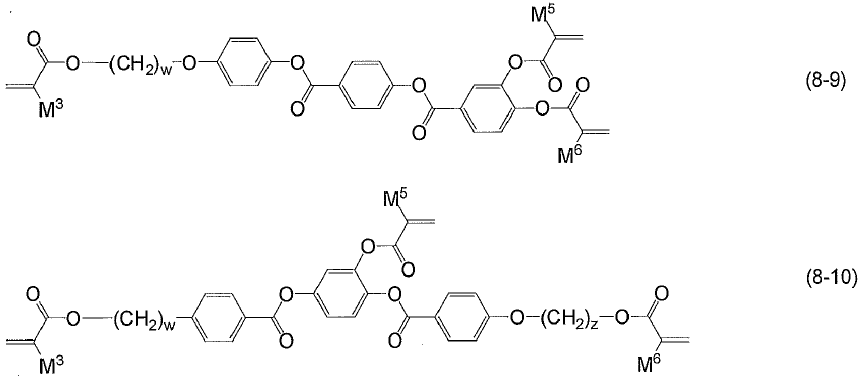

In Formula (8-1) to Formula (8-10), M³, M⁵, and M⁶ are independently a hydrogen atom or a methyl group, and w, k and z are independently an integer of 1 to 20.

In order to suppress the change over time or the change due to the environment of the haze rate and to lower the driving voltage of the liquid crystal device of the present invention, compounds that are represented by Formula (7) and Formula (8) and that have two or more polymerizable groups are preferably used.

A single compound selected from each of Formula (6) to Formula (8) may be used, and a plurality of compounds may be selected and used as well. At this time, in order to further increase the haze rate of the liquid crystal device of the present invention in a scattering state, a compound that is represented by Formula (6) and has one polymerizable group is preferably used in combination with the compounds represented by Formula (7) and Formula (8). At this time, the compound represented by Formula (6) preferably accounts for 50 weight% or less and more preferably 30 weight% or less based on the compounds represented by Formula (7) and Formula (8).

As specific examples of the compounds represented by Formulae (6) to (8), polymerizable liquid crystal compounds described in, for example, Japanese Patent No. 4063873, Japanese Patent Laid-Open No. 2008-266550, and Japanese Patent Laid-Open No. 2008-266632 can be used. Compounds most suitable for improving the contrast characteristics and suppressing the cost of the liquid crystal device are as follows.

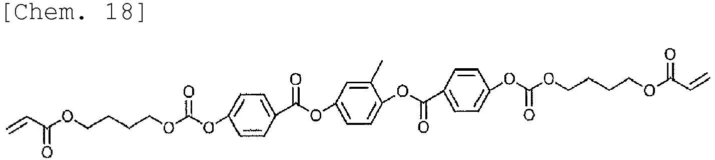

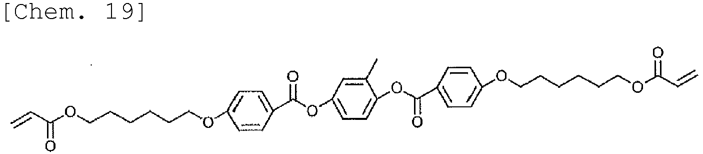

In order to maintain the contrast characteristics of the liquid crystal device, the content of the polymer derived from at least one polymerizable compound represented by Formulae (6) to (8) is preferably 5 to 50 weight% based on the entirety of the materials of the light control layer.

In a more preferable embodiment, the light control layer has a content of the component derived from the non-polymerizable perpendicular alignment agent of preferably 0.5 to 5 weight% and more preferably 1 to 4 weight%, a content of the component derived from the polymerizable compound (C) of preferably 5 to 45 weight% and more preferably 6 to 20 weight%, and a content of the liquid crystal composition (A) in a range of preferably 50 weight% to 94.5 weight% and more preferably 76 to 93 weight%.

The light control layer has a total content of the components derived from the polymerizable perpendicular alignment agent and the polymerizable compound (C) in a range of preferably 5 weight% to 50 weight% and more preferably 6 to 25 weight%, and a content of the liquid crystal composition (A) in a range of preferably 50 weight% to 95 weight% and more preferably 7 to 94 weight% based on the entire light control layer.

In the liquid crystal device according to the present invention, commonly used compounds other than those of Formula (6) to Formula (8) can also be used as the above polymer forming monomers or polymer forming oligomers. Examples of such compounds include compounds represented by General Formulae (9), (10), and (11) below:

P¹- Z²⁰ - P² (9)

In Formula (9), Z²⁰ is an alkylene group having 1 to 20 carbon atoms, and in this alkylene group, at least one hydrogen atom is optionally replaced with an alkyl group having 1 to 5 carbon atoms, a fluorine atom, a chlorine atom, or P³, at least one -CH₂- is optionally replaced with -O-, - CO-, -COO-, -OCO-, -NH-, or -N(R⁵)-, at least one -CH₂-CH₂- is optionally replaced with -CH=CH- or -C≡C-, at least one -CH₂-is optionally replaced with a divalent group produced by removing two hydrogen atoms from a carbocyclic saturated aliphatic compound, a heterocyclic saturated aliphatic compound, a carbocyclic unsaturated aliphatic compound, a heterocyclic unsaturated aliphatic compound, a carbocyclic aromatic compound, or a heterocyclic aromatic compound, in these divalent groups, the number of carbon atoms is 5 to 35, at least one hydrogen atom is optionally replaced with R⁵ or P³, here R⁵ is an alkyl group having 1 to 12 carbon atoms, and in this alkyl group, at least one -CH₂- is optionally replaced with -O-, -CO-, -COO-, or -OCO-;
P¹, P², and P³ are independently a polymerizable group, and
P¹, P², and P³ are independently a group selected from the group consisting of polymerizable groups represented by Formula (P-1) to Formula (P-6).

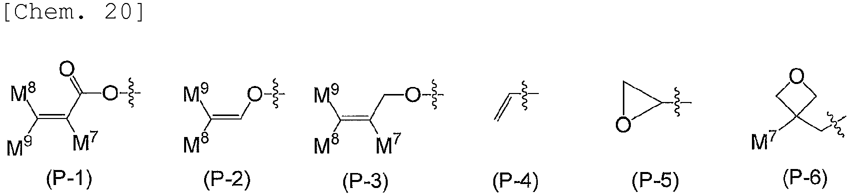

In Formula (P-1) to Formula (P-6), M¹, M², and M³ are independently a hydrogen atom, a fluorine atom, an alkyl group having 1 to 5 carbon atoms, or an alkyl group having 1 to 5 carbon atoms in which at least one hydrogen atom is replaced with a fluorine atom or a chlorine atom.

In Formula (9), at least one of P¹, P², and P³ is preferably an acryloyloxy or methacryloyloxy group.

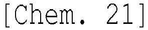

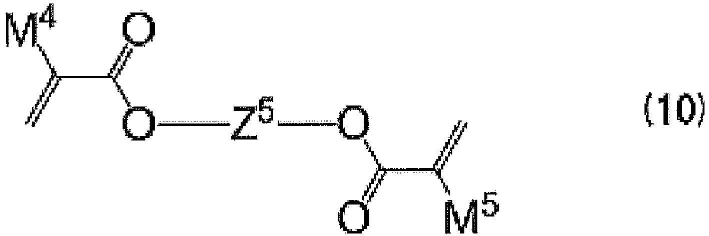

In Formula (10), M⁴ and M⁵ are independently a hydrogen atom or a methyl group; and Z⁵ is an alkylene group having 20 to 80 carbon atoms, in this alkylene group, at least one hydrogen atom is optionally replaced with an alkyl group having 1 to 20 carbon atoms, a fluorine atom, or a chlorine atom, at least one -CH₂- is optionally replaced with -O-, - CO-, -COO-, -OCO-, -NH-, or -N(R⁵)-, at least one -CH₂-CH₂- is optionally replaced with -CH=CH- or -C≡C-, here R⁵ is an alkyl group having 1 to 12 carbon atoms, and in this alkyl group, at least one -CH₂- is optionally replaced with -O-, - CO-, -COO-, or -OCO-.

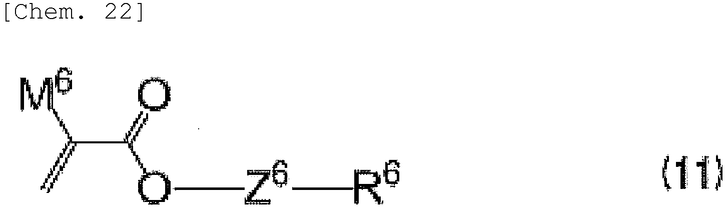

In Formula (11), M⁶ is a hydrogen atom or a methyl group; and Z⁶ is a single bond or an alkylene group having 1 to 5 carbon atoms, and in this alkylene group, at least one hydrogen atom is optionally replaced with a fluorine atom or a chlorine atom, and at least one -CH₂- is optionally replaced with -O-, -CO-, -COO-, or -OCO-; R⁶ is an alkyl group having 1 to 40 carbon atoms, and in this alkyl group, at least one hydrogen atom is optionally replaced with a fluorine atom or a chlorine atom, at least one -CH₂- is optionally replaced with -O-, -CO-, -COO-, or -OCO-, at least one -CH₂- is optionally replaced with a divalent group produced by removing two hydrogen atoms from a carbocyclic saturated aliphatic compound, a heterocyclic saturated aliphatic compound, a carbocyclic unsaturated aliphatic compound, a heterocyclic unsaturated aliphatic compound, a carbocyclic aromatic compound, or a heterocyclic aromatic compound, in these divalent groups, the number of carbon atoms is 5 to 35, at least one hydrogen atom is optionally replaced with an alkyl group having 1 to 12 carbon atoms, and in this alkyl group, at least one -CH₂- is optionally replaced with -O-, -CO-, -COO-, or -OCO-.

Examples of the polymer forming monomers or oligomers represented by Formula (9) to Formula (11) include polymer forming monomers or oligomers that do not have a group showing liquid crystal properties such as an acryloyl group and that have one polymerizable group, such as n-dodecyl acrylate; and
polymer forming monomers or oligomers that do not have a group showing liquid crystal properties and that have two or more polymerizable groups, such as alkylene glycol diacrylate (the number of carbon atoms of alkylene is 1 to 10), polyethylene glycol diacrylate (the number of polyethylene repeating units is 1 to 10), polypropylene glycol di(meth)acrylate (the number of polypropylene repeating units is 1 to 10), poly(methyl) ethylene glycol di(meth)acrylate (the number of polyethylene repeating units is 1 to 10), trimethylolpropane tri(meth)acrylate, tetraethylene glycol di(meth)acrylate, and 1,10-decanediol di(meth)acrylate.

In order to reduce the haze rate in a transmitting state, the amount of compounds represented by Formula (9) to Formula (11) used is preferably 40 weight% or less and more preferably 20 weight% or less based on the entirety of the polymer forming monomers or oligomers.

### Liquid crystal composition

A liquid crystal composition that is generally recognized as a liquid crystal material in this technical field can be used as the liquid crystal composition for use in the light control layer. Such a liquid crystal composition is what is generally recognized as a liquid crystal material in this technical field, and a compound having negative dielectric anisotropy can be used as well. Light control windows that are exposed to external light, such as building windows and show windows, and vehicle sunroofs and rear windows, are required to have ultraviolet resistance. The liquid crystal composition, when used on vehicles and the like, is further required to have heat resistance because the temperature of the vehicle body is increased due to sunlight, for example, in summer. Accordingly, a liquid crystal composition is used that is composed of a compound having a stable structure against ultraviolet rays, that has an NI point (an upper limit temperature) of 80°C or higher, preferably 90°C or higher, and more preferably 100°C or higher to have heat resistance, that has a transition temperature from a nematic phase (a lower limit temperature) of -10°C or lower, preferably -20°C or lower, more preferably -30°C or lower, and even more preferably -40°C or lower to have cold resistance in a low temperature environment, for example, in winter, and that has a _{Δ}n of 0.15 or more, preferably 0.18 or more, and more preferably 0.2 or more to have a high haze when an electric field is applied. In order to maintain the initial state of scattering and transmitting characteristics such as haze even after repetitively switching the electric field ON and OFF, Δε is -1 to -30, preferably -2 to -20.

The liquid crystal composition is preferably a liquid crystal material containing at least one liquid crystal selected from compounds represented by General Formula (4) as a first component.

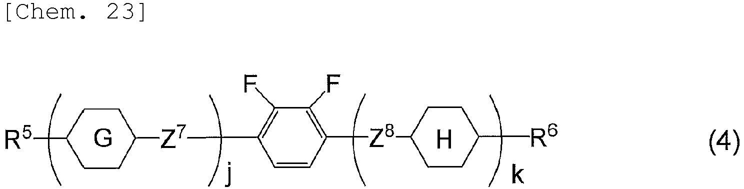

In Formula (4), R⁵ and R⁶ are independently an alkyl group having 1 to 12 carbon atoms, an alkoxy group having 1 to 12 carbon atoms, an alkenyl group having 2 to 12 carbon atoms, an alkenyloxy group having 2 to 12 carbon atoms, or an alkyl group having 1 to 12 carbon atoms in which at least one hydrogen atom is replaced with a fluorine atom or a chlorine atom;
ring G and ring H are independently 1,4-cyclohexylene, 1,4-cyclohexenylene, tetrahydropyran-2,5-diyl, 1,4-phenylene, 1,4-phenylene in which at least one hydrogen atom is replaced with a fluorine atom or a chlorine atom, naphthalene-2,6-diyl, naphthalene-2,6-diyl in which at least one hydrogen atom is replaced with a fluorine atom or a chlorine atom, chroman-2,6-diyl, or chroman-2,6-diyl in which at least one hydrogen atom is replaced with a fluorine atom or a chlorine atom;
j is 1, 2, or 3, and k is 0 or 1; and
the sum of j and k is 3 or less.

Examples of the compounds of formula (4) are shown as Formula (4-1) to Formula (4-22) below.

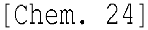

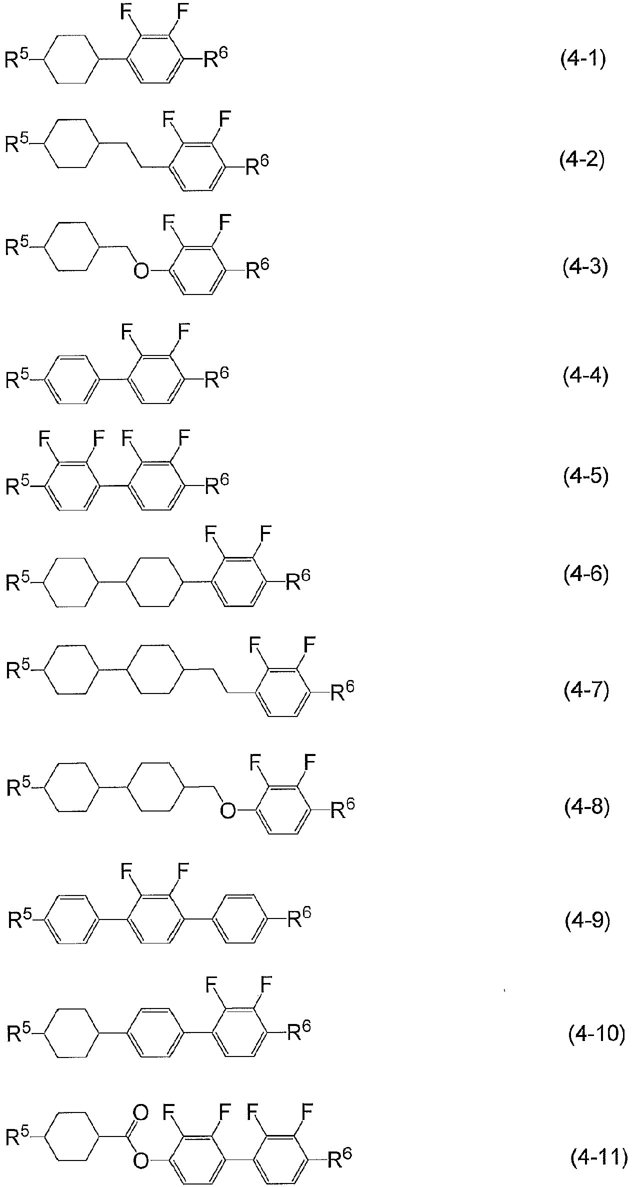

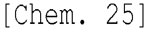

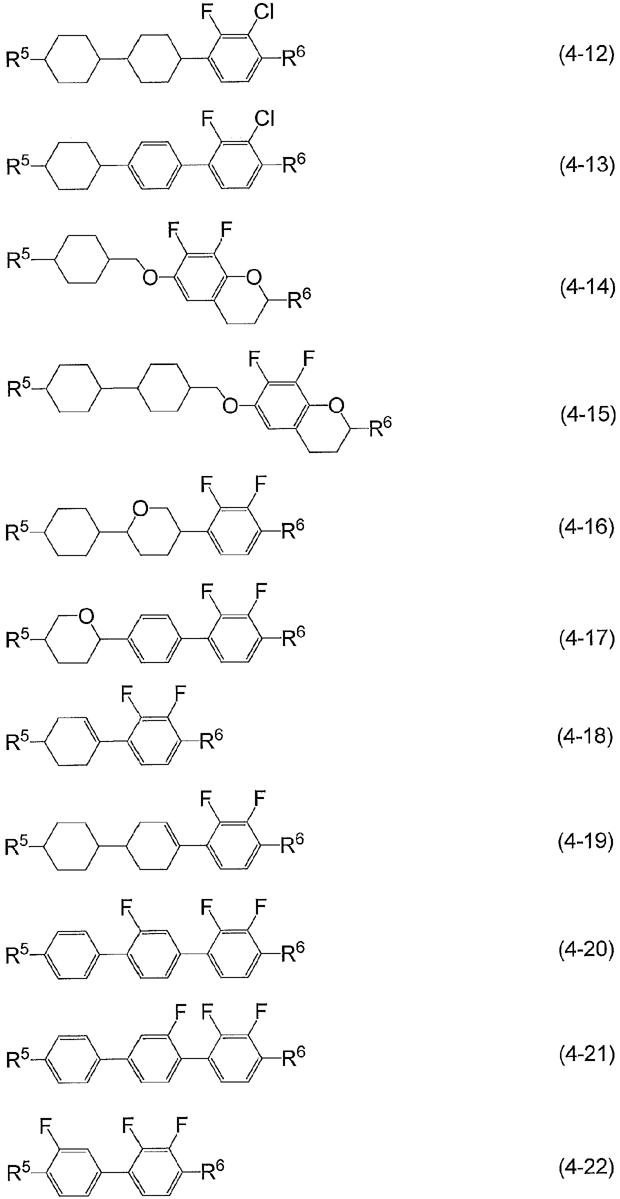

In Formula (4-1) to Formula (4-22), R⁵ and R⁶ are independently an alkyl group having 1 to 12 carbon atoms, an alkoxy group having 1 to 12 carbon atoms, an alkenyl group having 2 to 12 carbon atoms, an alkenyloxy group having 2 to 12 carbon atoms, or an alkyl group having 1 to 12 carbon atoms in which at least one hydrogen atom is replaced with a fluorine atom or a chlorine atom.

The liquid crystal composition preferably has a proportion of the first component in a range of 20 weight% to 90 weight%, preferably 30 weight% to 85 weight%, and more preferably 40 to 60 weight% based on the entire liquid crystal composition. When the first component is contained in such an amount, the liquid crystal composition has an increased negative dielectric anisotropy.

Moreover, the liquid crystal composition preferably contains at least one liquid crystal compound selected from compounds represented by General Formula (5) as a second component thereof.

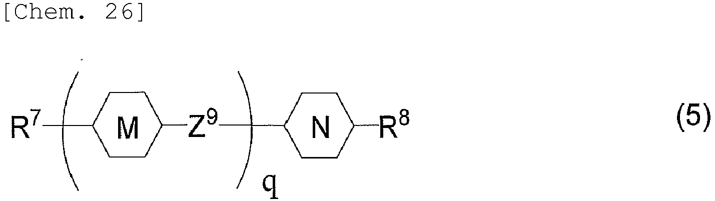

In Formula (5), R⁷ and R⁸ are independently an alkyl group having 1 to 12 carbon atoms, an alkoxy group having 1 to 12 carbon atoms, an alkenyl group having 2 to 12 carbon atoms, an alkyl group having 1 to 12 carbon atoms in which at least one hydrogen atom is replaced with a fluorine atom or a chlorine atom, or an alkenyl group having 2 to 12 carbon atoms in which at least one hydrogen atom is replaced with a fluorine atom or a chlorine atom;
ring M and ring N are independently 1,4-cyclohexylene, 1,4-phenylene, 2-fluoro-1,4-phenylene, or 2,5-difluoro-1,4-phenylene;
Z⁹ is a single bond, ethylene, or carbonyloxy; and
q is 1, 2, or 3.

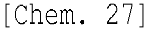

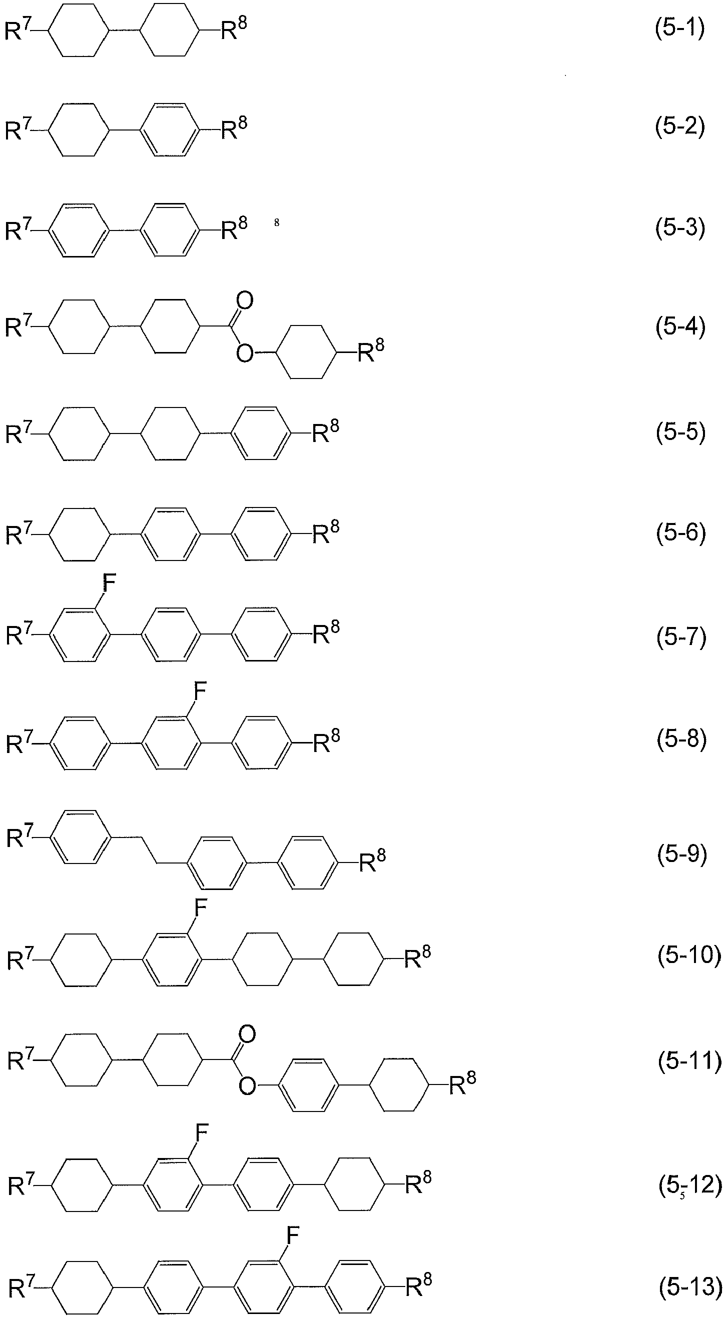

In Formula (5-1) to Formula (5-13), R⁷ and R⁸ are independently an alkyl group having 1 to 12 carbon atoms, an alkoxy group having 1 to 12 carbon atoms, an alkenyl group having 2 to 12 carbon atoms, an alkyl group having 1 to 12 carbon atoms in which at least one hydrogen atom is replaced with a fluorine atom or a chlorine atom, or an alkenyl group having 2 to 12 carbon atoms in which at least one hydrogen atom is replaced with a fluorine atom or a chlorine atom.

The liquid crystal composition (A) has a proportion of the second component in a range of 10 weight% to 70 weight%, preferably 15 weight% to 65 weight%, and more preferably 40 weight% to 60 weight% based on the entire liquid crystal composition.

By combining the first component and the second component, the negative dielectric anisotropy of the liquid crystal composition can be increased, and the lower limit temperature can also be lowered.

In order to cause the polymer forming monomer or oligomer to polymerize and form a polymer network, a thermal polymerization initiator, a photopolymerization initiator, or the like may be contained in the light control layer of the liquid crystal device of the present invention. At this time, for the ease of device production, a photopolymerization initiator is preferably used. Commercially available polymerization initiators such as thermal polymerization initiators and photopolymerization initiators can be used. In addition, other additives such as a chain transfer agent, a photosensitizer, and a dye crosslinking agent may be contained in the liquid crystal composition.

The liquid crystal device of the present invention is a reverse mode liquid crystal device having a light control layer and at least one set of electrodes, wherein a pair of electrode layers are provided so as to face each other such that the pair of electrode layers at least partially sandwich the light control layer.

The electrode layer configuration is not particularly limited as long as at least one set of electrode layers are provided to apply a voltage across the light control layer, and can be suitably selected according to the shape or the like of the light control layer. For example, in the case of a cuboidal light control layer, the electrode layers are provided on the opposite surfaces, and the opposite surfaces may be surfaces having the largest area or may be the end surfaces in the thickness direction or the upper and lower surfaces. If the light control layer is curved, curved electrode layers can also be provided. Parallel or non-parallel electrodes that are spaced apart may be provided on the same surface of the light control layer. Moreover, the electrodes may be provided on the entirety of, or may be provided on a part of, the light control layer. As long as the electrode layers do not short-circuit, the electrodes may be provided on one of the front and back surfaces and on a side surface (end surface) of the light control layer. A pair of electrodes mean that there are at least one set of electrodes, and are not limited to 1 : 1, and may be 1 : 2 or more (multiple anodes or cathodes), 2 or more : 2 or more (multiple anodes and multiple cathodes).

Specifically, one embodiment of the liquid crystal device of the present invention has two substrates both of which have an electrode layer and at least one of which is transparent, and a light control layer interposed between the substrates. The electrode layers are provided such that the electrodes can apply a voltage across the liquid crystal material.

The substrate for use in the liquid crystal device may be a rigid material such as glass or metal, or may be a flexible material such as plastic. In the liquid crystal device, two substrates face each other with an appropriate interval therebetween.

At least one of the substrates has transparency, but complete transparency is not required. If the liquid crystal device is used to act on light that passes from one side to the other side of the device, both of the two substrates should have an appropriate transparency.

Depending on the purpose, an appropriate transparent or opaque electrode may be disposed on the entirety or a part of the surface of the substrate. Known conductive materials such as ITO, copper, silver, gold, and PEDOT (poly(3,4-ethylenedioxythiophene)-poly(styrenesulfonic acid)) are used as electrodes.

In a preferable embodiment of the present invention, the light control layer is interposed between a pair of transparent substrates, and the transparent substrates have transparent electrodes. The transparent substrates are preferably a glass plate or an acrylic plate, and the transparent substrates are more preferably a plastic film.

When the liquid crystal device of the present invention is used as a display device of a computer terminal, a projection display device, or the like, a TFT or the like is preferably provided on an electrode layer to form an active element.

In the present invention, an alignment film formed of polyimide or the like, which is provided in commonly used liquid crystal devices, is not necessarily required. As in well-known liquid crystal devices, normally a spacer for retaining an interval can be interposed between the two substrates.

Examples of usable spacers include various liquid crystal cell spacers such as Mylar, alumina, rod type glass fiber, glass bead, and polymer bead spacers.

In order to secure the light control layer of the liquid crystal device of the present invention, a method can be used in which the light control layer is interposed between the two substrates, a sealing material is applied to the circumference of the substrates, and the substrates are bonded to each other, as with commonly used liquid crystal display elements. At this time, since the liquid crystal device of the present invention does not require an alignment film, other materials such as the alignment film are not present between the sealing material and the substrates, and thus the liquid crystal device of the present invention is advantageous in that a sealing material is unlikely to peel off. Moreover, even without the sealing material, the substrates can be secured to each other due to the presence of a polymer network. In this case, in order to attain the strength of securing, the content of a polymerization product derived from compounds represented by Formula (7) and Formula (8) that are materials of the polymer network is preferably 5 to 50 weight% based on the entirety of the materials of the light control layer.

The transparent material which constitute polymer network) in the light control layer is formed of a polymerization product of the polymerizable material and, in addition, it may be a material dispersed in a fibrous form or a particle form, a film-like material in which the above-described liquid crystal material is dispersed in a droplet form, or a gel material having a three-dimensional network structure.

The light control layer preferably has a network structure such that the liquid crystal composition forms a continuous structure, and it is essential for scattering of light to form a disordered state of liquid crystal molecules to thereby form an optical interface between the polymer and the liquid crystal composition or between the liquid crystal domains, or to form an optical interface by the state of alignment of the liquid crystal composition when an electric field is applied.

The liquid crystal device of the present invention has high contrast, with a haze rate of 20% or less when no voltage is applied and a haze rate of 70% or more when voltage is applied.

The reverse mode liquid crystal device of the present invention can be produced, for example, as follows.

Specifically, a composition containing a liquid crystal composition, a perpendicular alignment agent, and a polymerizable material containing at least one polymerizable compound selected from polymer forming monomers and polymer forming oligomers is interposed between two substrates both of which have an electrode layer and at least one of which is transparent, the polymerizable material is polymerized by irradiation of ultraviolet rays through the transparent substrate or heating the transparent substrate, and thus a liquid crystal device can be produced.

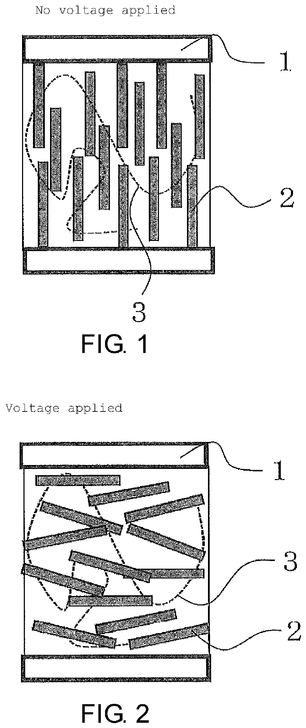

Figure 1 and Figure 2 are schematic diagrams of examples of the reverse mode liquid crystal device of the present invention. Figure 1 shows a state when no voltage is applied. In this state, the alignment of liquid crystal materials is homeotropic, and light is transmitted, thus making the panel transparent.

Figure 2 shows a state when voltage is applied. In this state, although the liquid crystal composition attempts to take a homogenous alignment, the presence of surrounding networks prevents a uniform alignment, and light is scattered, thus making the panel opaque.

The method for interposing the composition, which is a material for forming the light control layer, between two substrates is not particularly limited. The composition may be injected between the substrates by a known injection technique such as a vacuum injection method, an ODF method, or an inkjet method.

The thickness of the light control layer having light scattering properties in the liquid crystal device of the present invention can be adjusted according to the intended use. In order to obtain sufficient contrast between transparency and opacity due to light scattering, the thickness is preferably 2 to 40 µm, more preferably 5 to 20 µm, and most preferably 7 to 15 µm. In general, a greater substrate interval necessitates an application of a higher voltage for switching.

Dye may be added to the light control layer in the liquid crystal device of the present invention. The dye is preferably dichroic dye to increase the light utilization efficiency in a transmitting state. The concentration thereof is preferably 0.01 weight% to 10 weight% and more preferably 0.1 weight% to 5 weight% based on the entire liquid crystal composition in order to prevent precipitation of the dye and to attain sufficient color development.

In order to impart weather resistance and light resistance, a protective film such as an ultraviolet absorbing film can be applied to the liquid crystal device of the present invention. At this time, the protective film may be positioned on the same side as the light control layer or on the opposite substrate side, or positioned elsewhere, and one or multiple protective films may be used.

The liquid crystal device having a light control layer obtained in the present invention can be used in various applications, e.g., building applications such as interior decoration and automobile applications such as automobile roofs, as light control windows, light guiding plates (light guides), and light modulation devices. Also, the liquid crystal device can be used in combination with ordinary liquid crystal display elements in which a polarizing plate is used.

According to the present invention, a liquid crystal device is obtained that can be driven at a low voltage, has a low haze and is highly transparent when no voltage is applied, and has a high haze and is highly scattering when voltage is applied.

### EXAMPLES

The present invention will now be described below in further detail with reference to Examples of the present invention. However, the present invention is not limited to these Examples.

In Examples, room temperature refers to 15 to 30°C. Unless otherwise noted, Examples were carried out at room temperature.

In Examples, compound (1)-1 used as a perpendicular alignment agent is represented by the following Chemical Formula.

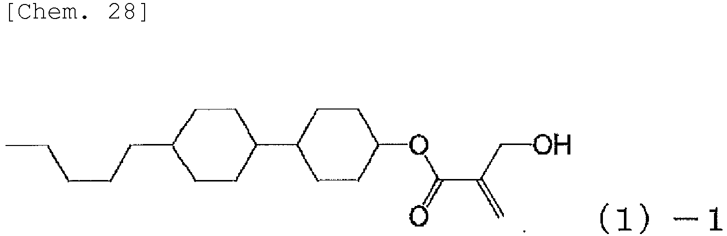

Those skilled in the art can synthesize the above compound (1)-1 with reference to International Publication No. WO 2016/129490A1.

The transition temperature of compound (1)-1 from a crystal phase to a smectic phase was 40.8°C. The transition temperature of compound (1)-1 from a smectic phase to an isotropic liquid was 109°C.

In Examples, compound M-1 used as a polymerizable monomer is represented by the following Chemical Formula.

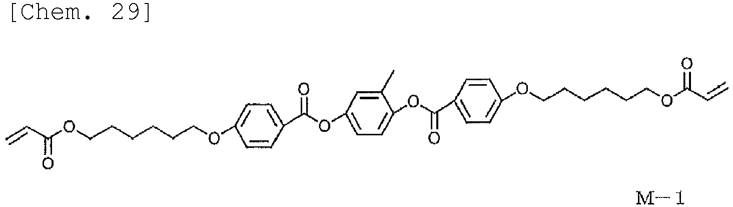

Those skilled in the art can synthesize the above compound M-1 with reference to, for example, Macromolecules 1990, 23, 2474-2477.

The transition temperature of compound M-1 from a crystal phase to a nematic phase was 83.6°C. The transition temperature of compound M-1 from a nematic phase to an isotropic liquid was 116.9°C. The extraordinary light refractive index of compound M-1 was 1.6627. The ordinary light refractive index of compound M-1 was 1.5048.

Compound M-1 is a polymer forming monomer having two acrylate groups. Compound M-1 as a pure substance has a liquid crystal phase.

In the Examples, compound M-2 used as a polymerizable monomer is represented by the following Chemical Formula.

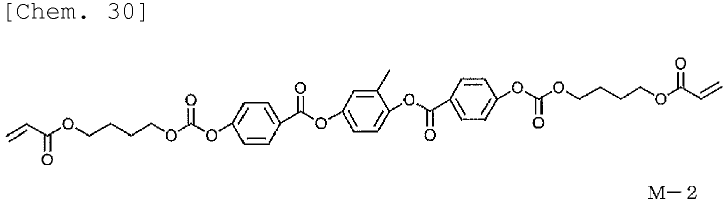

Those skilled in the art can synthesize the above compound M-2 with reference, for example, to Japanese Patent No. 4063873.

The transition temperature of compound M-2 from a crystal phase to a nematic phase was 60.3°C. The transition temperature of compound M-2 from a nematic phase to an isotropic liquid was 124.4°C. The extraordinary light refractive index of compound M-2 was 1.6370. The ordinary light refractive index of compound M-1 was 1.4924.

Compound M-2 is a polymer forming monomer having two acrylate groups. Compound M-2 as a pure substance has a liquid crystal phase.

### (Method of measuring transition temperature)

A sample was placed on a hot plate of a melting point measurement device equipped with a polarizing microscope, and heated at a specific rate. The temperature at which a part of the sample changed from a nematic phase to an isotropic liquid was measured, and regarded as the "transition temperature from a nematic phase to an isotropic liquid" of the sample.

A sample was placed on the hot plate of the melting point measurement device equipped with a polarizing microscope, and cooled at a specific rate. The temperature at which a part of the sample changed from an isotropic liquid to a nematic phase was measured, and regarded as the "transition temperature from an isotropic liquid to a nematic phase" of the sample.

The hot plate of the melting point measurement device used was a 10083L large sample cooling and heating stage commercially available from LINKAN.

### <Method of measuring average refractive index>

The average refractive index was determined by the following procedure.
(1) The ordinary light refractive index of a sample with respect to a white light source of a lamp was measured using an Abbe refractometer;
(2) The extraordinary light refractive index of the sample with respect to a white light source of a lamp was measured using the Abbe refractometer; and
(3) The average refractive index was calculated according to ((ordinary light refractive index² + extraordinary light refractive index²)/2)^{1/2}.

### <Calculation of contrast ratio>

The contrast ratio is a ratio between a transmitted light intensity under certain circumstances and a transmitted light intensity under different circumstances.

### <Measurement of ε∥ and Δε>

ε∥, ε^{⊥}, and Δε were obtained by the following procedure.
(1) A sample was placed in a TN element, with an interval between two glass substrates of 10 µm and a twist angle of 80 degrees;
(2) A sine wave of 10 V and 1 kHz was applied to the element, and the dielectric constant of liquid crystal molecules in the long axis direction was measured after 2 seconds and regarded as ε∥;
(3) A sine wave of 0.5 V and 1 kHz was applied to the element, and the dielectric constant of liquid crystal molecules in the short axis direction was measured after 2 seconds, and regarded as ε^{⊥}; and
(4) The value of s∥ - ε^{⊥} was regarded as Δε.

### <Measurement of haze of cell and measurement of parallel light transmittance of cell>

A cell was placed in a Haze Meter NDH5000 (manufactured by Nippon Denshoku Industries Co., Ltd.) so that the source light was perpendicular to the surface of the cell, and the haze and the parallel light transmittance were measured at room temperature.

### <Preparation of liquid crystal composition LC-1>

Liquid crystal composition LC-1 was prepared by mixing the compounds shown in Table 1. Those skilled in the art can synthesize the compounds shown in Table 1 with reference to the methods described in, for example, JP02503443A, JP20008040A, and Molecular Crystals and Liquid Crystals, Volume 195, Pages 221-37, 1991.

**[Table 1]**

| Structure of compound | Compositional proportion of compound |
|---|---|
| 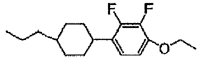 | 9 |
| 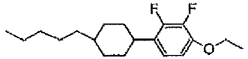 | 7 |
| 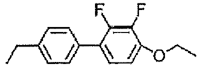 | 6 |
| 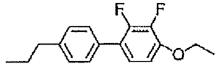 | 10 |
| 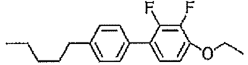 | 10 |
| 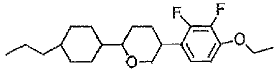 | 7 |
| 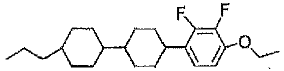 | 5 |
| 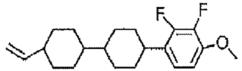 | 3 |
| 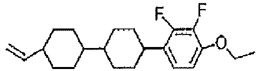 | 11 |
| 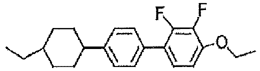 | 3 |
| 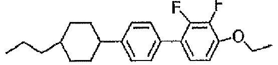 | 8 |
| 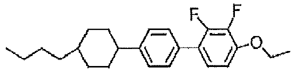 | 3 |
| 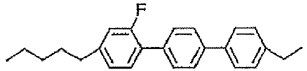 | 9 |
| 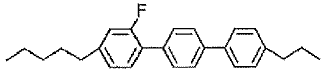 | 9 |
| 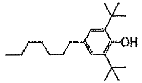 | 0.015 |

### (Example 1)

### <Preparation of liquid crystal composition LC-1-1>

Liquid crystal composition LC-1 and Irgacure (TM) 651 were mixed at a weight ratio of 100/0.3, and this mixture was referred to as liquid crystal composition LC-1-1. Irgacure (TM) 651 is 2,2-dimethoxy-1,2-diphenylethan-1-one.

The phase transition temperature of liquid crystal composition LC-1 from a nematic phase to an isotropic liquid was 79.5°C. The transition temperature was measured while heating the composition at a rate of 2.0°C/min.

Physical property data of liquid crystal composition (LC-1) is shown in Table 2.

**[Table 2]**

| Name of liquid crystal composition | Liquid crystal composition (LC-1) |
|---|---|
| Transition temperature from liquid crystal phase to isotropic liquid phase | 79.5°C |
| Δn | 0.156 |
| Ordinary light refractive index | 1.496 |
| Extraordinary light refractive index | 1.651 |
| Δε | -5.52 |
| ε∥ | 4.26 |
| ε^{⊥} | 9.78 |

### <Liquid crystal materials>

Liquid crystal composition LC-1-1, (1)-1, and M-1 were mixed at a weight ratio of 94/2/4, and this mixture was referred to as liquid crystal composition MLC-A. Liquid crystal composition LC-1-1, (1)-1, and M-2 were mixed at a weight ratio of 90/3/7, and this mixture was referred to as liquid crystal composition MLC-B.

### <Preparation of polymer/liquid crystal composite material PDLC-A>

Polymer/liquid crystal composite material PDLC-A was prepared by the following procedure.
(1) Two glass substrates each having a transparent conductive film electrode, on which no alignment treatment was performed, were disposed so that the electrodes were on the inside with a distance between the glass substrates of 10 µm, and liquid crystal composition MLC-A was inserted between the glass substrates to prepare a cell.
(2) The cell was heated until liquid crystal composition MLC-A reached an isotropic phase, and then cooled to room temperature. At this time, it was confirmed by phase observation under a polarization microscope that the liquid crystals in the cell were aligned perpendicular to the substrate.
(3) The cell was irradiated with light with a wavelength of 365 nm for 400 seconds at 2.5 mWcm⁻² to polymerize the liquid crystal composition in the cell.
(4) It was confirmed that the material between the glass substrates after the polymerization reaction retained a nematic liquid crystal phase.

The glass substrate used was KSSZ-10/A107P1NSS05 manufactured by EHC. Co., Ltd. By applying voltage across the electrodes of the glass substrates, it was possible to apply an electric field to liquid crystal composition MLC-A between the glass substrates.

The transparent conductive film was ITO. The size of the transparent conductive film was 10 mm × 10 mm. A potential difference was generated between the two substrates, and it was thus possible to apply an electric field to the inserted liquid crystal composition.

### <Preparation of polymer/liquid crystal composite material PDLC-B>

In the preparation of polymer/liquid crystal composite material PDLC-B, liquid crystal composition MLC-A was replaced with liquid crystal composition MLC-B. The cell was irradiated with light with a wavelength of 365 nm for 400 seconds at 2.5 mWcm⁻² to polymerize the liquid crystal composition in the cell, and thus polymer/liquid crystal composite material PDLC-B was prepared.

### <Electro-optical characteristics of polymer/liquid crystal composite material PDLC-A>

Polymer/liquid crystal composite material PDLC-A was disposed so that the source light was perpendicular to the surface of a cell, and the electro-optical characteristics of polymer/liquid crystal composite material PDLC-A were measured using an electric field applying unit and a bipolar power supply.

The polarizing microscope used was an Eclipse LV100POL manufactured by Nikon Corporation. The white light source of the polarizing microscope was used as a light source. The luminance meter used was a YOKOGAWA 3298F.

The electric field applying unit used was a waveform generator 3320A manufactured by Keysight Technologies, Inc. The bipolar power supply used was an Electronic Instruments 4010 manufactured by NF Corporation.

The relationship between an applied voltage and a transmitted light intensity in a crossed Nicols state was examined at room temperature using the following procedure.
(1) The voltage across the two transparent conductive film electrodes was raised from 0 V to 60 V. At this time, the transmitted light intensity was measured for each applied voltage.
(2) Then, the voltage across the two transparent conductive film electrodes was lowered from 60 V to 0 V. At this time, the transmitted light intensity was measured for each applied voltage.

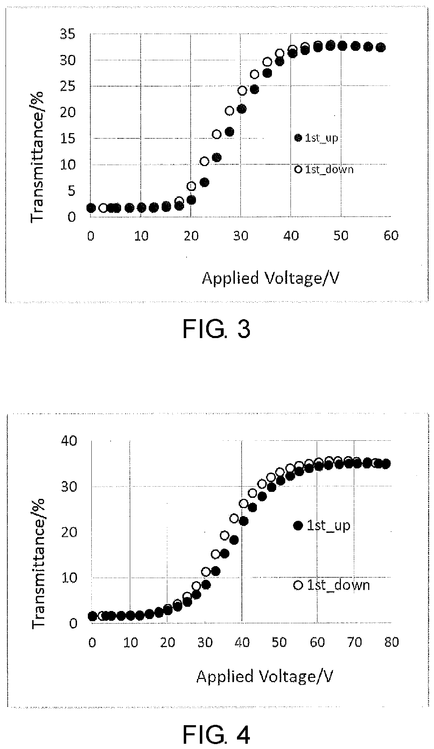

Figure 3 shows the curves showing the relation between the voltage applied across the electrodes and the transmittance of polymer/liquid crystal composite material PDLC-A. The transmittance relative to the voltage when the voltage across the electrodes was raised from 0 V to 60 V is indicated by black dots. The transmittance relative to the voltage when the voltage across the electrodes was lowered from 60 V to 0 V is indicated by white dots. Results are shown in Figure 3.

It was confirmed that applying a square wave of 20 V causes polymer/liquid crystal composite material PDLC-A to be driven in a reverse mode.

The contrast ratio between when no voltage was applied across the electrodes of polymer/liquid crystal composite material PDLC-A and when a voltage of 60 V was applied across the electrodes of polymer/liquid crystal composite material PDLC-A was as high as 18.

When a voltage of 38 V was applied across the electrodes of polymer/liquid crystal composite material PDLC-A, the transmitted light intensity was about 92% compared with the intensity attained when no voltage was applied. When a voltage of 18 V was applied across the electrodes of polymer/liquid crystal composite material PDLC-A, the transmitted light intensity was about 10% compared with the intensity attained when no voltage was applied. Thus, polymer/liquid crystal composite material PDLC-A was driven at a low driving voltage.

### <Electro-optical characteristics of polymer/liquid crystal composite material PDLC-B>

In the measurement of the electro-optical characteristics of PDLC-B, polymer/liquid crystal composite material PDLC-A was replaced with PDLC-B, and the voltage across the two transparent conductive film electrodes was raised from 0 to 80 V and lowered from 80 V to 0 V. At this time, the transmitted light intensity was measured for each applied voltage.

Figure 4 shows curves showing the relation between the voltage applied across electrodes and the transmittance of polymer/liquid crystal composite material PDLC-B. The transmittance relative to the voltage when the voltage across the electrodes was raised from 0 V to 80 V is indicated by black dots. The transmittance relative to the voltage when the voltage across the electrodes was lowered from 80 V to 0 V is indicated by white dots. Results are shown in Figure 4.

It was confirmed that applying a square wave of 20 V causes polymer/liquid crystal composite material PDLC-B to be driven in a reverse mode.

The contrast ratio between when no voltage was applied across the electrodes of polymer/liquid crystal composite material PDLC-B and when a voltage of 80 V was applied across the electrodes of polymer/liquid crystal composite material PDLC-A was 19.

When a voltage of 50 V was applied across the electrodes of polymer/liquid crystal composite material PDLC-B, the transmitted light intensity was about 90% compared with the intensity attained when no voltage was applied. When a voltage of 20 V was applied across the electrodes of polymer/liquid crystal composite material PDLC-B, the transmitted light intensity was about 10% compared with the intensity attained when no voltage was applied.

### <Measurement of haze and parallel light transmittance of polymer/liquid crystal composite material PDLC-A>

Polymer/liquid crystal composite material PDLC-A was placed in a haze meter so that the source light was perpendicular to the surface of a cell. A voltage of 0 to 50 V was applied to the cell, and a haze and a parallel light transmittance were measured.

The haze and the parallel light transmittance of a measurement cell when no voltage was applied to the measurement cell were measured and provided in A and C in Table 3. A indicates haze, and C indicates parallel light transmittance.

The haze of the measurement cell when a voltage of 50 V was applied to the measurement cell was measured and provided in B in Table 3.

### <Measurement of haze and parallel light transmittance of polymer/liquid crystal composite material PDLC-B>

Polymer/liquid crystal composite material PDLC-B was placed in a haze meter so that the source light was perpendicular to the surface of a cell. A voltage of 0 to 60 V was applied to the cell, and a haze and a parallel light transmittance were measured.

The haze and the parallel light transmittance of a measurement cell when no voltage was applied to the measurement cell were measured and provided in A and C in Table 3. A indicates haze, and C indicates parallel light transmittance.

The haze of the measurement cell when a voltage of 60 V was applied to the measurement cell was measured and provided in B in Table 3.

**[Table 3]**

| Polymer/liquid crystal composite material | Haze% | | Parallel light transmittance % | Cell voltage when voltage applied V |
|---|---|---|---|---|
| | Applied voltage OFF | Applied voltage ON | Applied voltage OFF | |
| | A | B | C | |
| PDLC-A | 0.48 | 91.46 | 87.54 | 50 |
| PDLC-B | 0.96 | 78.48 | 87.67 | 60 |

Compounds (2) -1, P-1-1, P-1-2, P-1-3, P-1-4, P-1-5, P-1-6, P-1-7, P-1-8, P-1-9, P-2-1, P-2-2, P-3-1, P-4-1, P-5-1, P-6-1, P-7-1, C-2, and C-3 used as perpendicular alignment agents in Examples are represented by the following Chemical Formulae.

Those skilled in the art can synthesize these compounds with reference to the methods described in, for example, Japanese Patent Application No. 2015-023330, Japanese Patent Application No. 2015-181370, Japanese Patent Laid-Open No. 2008-266550, Japanese Patent Laid-Open No. 2008-266632, Japanese Patent Application No. 2016-120581, International Publication No. WO 2017/130566A, and International Publication No. WO 2016/015803A1. Compounds P-5-1, P-6-1, P-7-1, and C-2 can be purchased from Aldrich Partner Products and Tokyo Chemical Industry Co., Ltd.

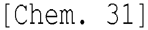

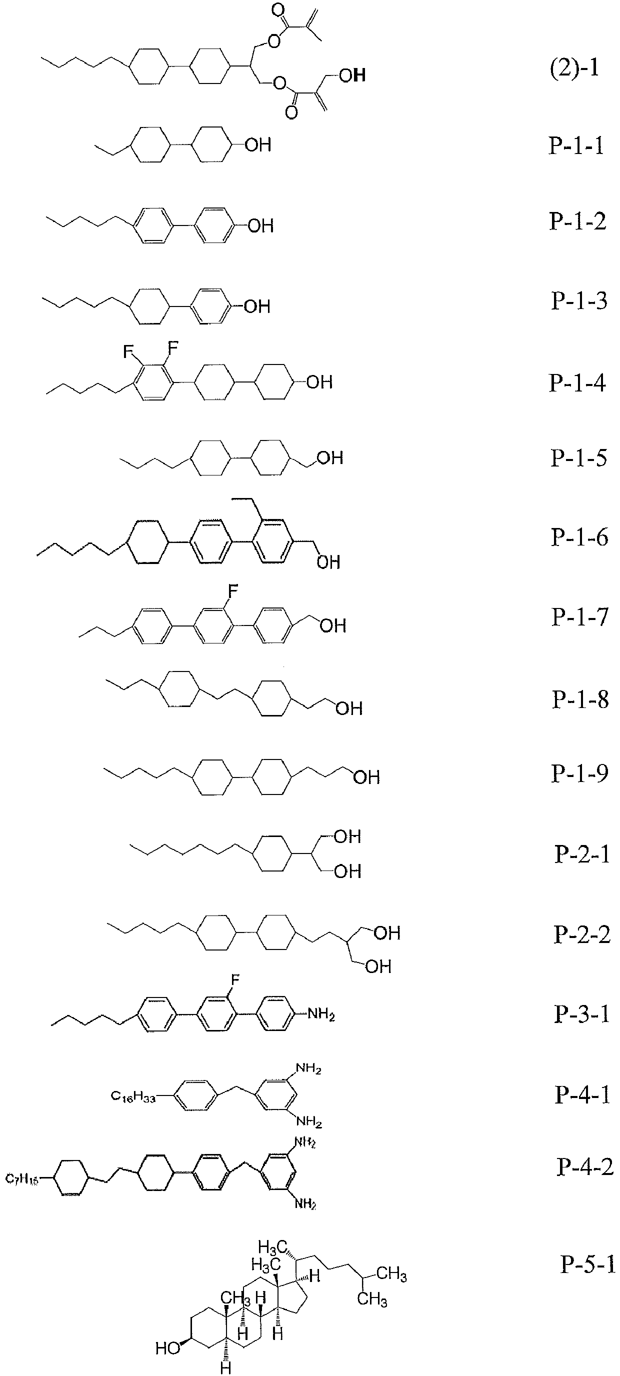

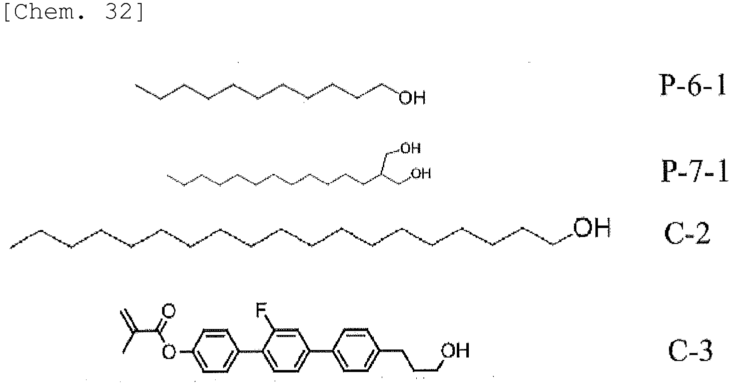

Compounds M-3, M-4, M-5, and M-6 used as polymerizable compounds in the Examples are represented by the following Chemical Formulae. Those skilled in the art can synthesize these compounds with reference to the methods described in, for example, JP4036076, JP5295471, JP5162985, and Molecular Crystals and Liquid Crystals, Volume 137, Issues 1-4, Pages 349-64, 1986. Compounds M-7, M-8, and M-9 can be purchased from Shin Nakamura Chemical Co., Ltd., and Tokyo Chemical Industry Co., Ltd.

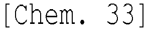

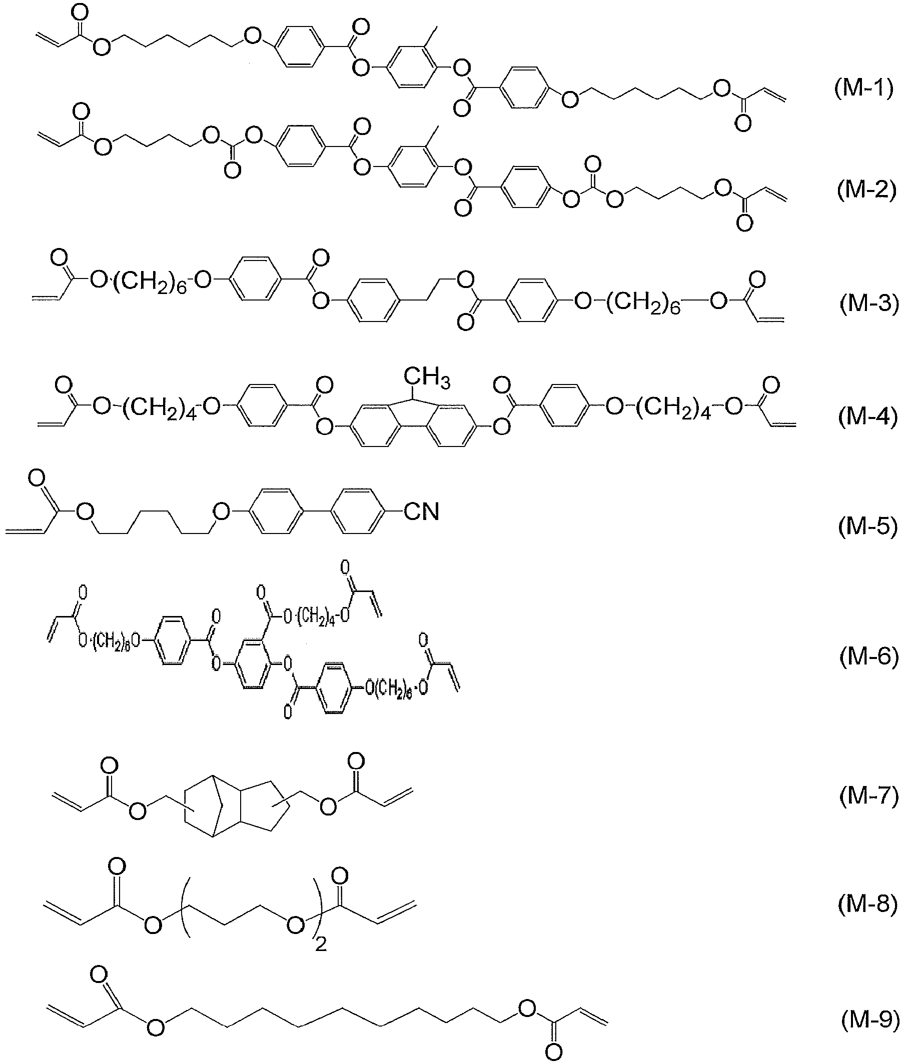

### <Liquid crystal materials>

Liquid crystal composition LC-1-1, (2)-1, and M-1 were mixed at a weight ratio of 93/2/5, and this mixture was referred to as liquid crystal composition MLC-D.

Liquid crystal composition LC-1-1, P-3-1, M-2, and M-5 were mixed at a weight ratio of 93/1/5/1, and this mixture was referred to as liquid crystal composition MLC-S.

Liquid crystal composition LC-1-1, P-4-1, and M-2 were mixed at a weight ratio of 92.5/1.5/6, and this mixture was referred to as liquid crystal composition MLC-T.

Liquid crystal composition LC-1-1, P-4-2, and M-2 were mixed at a weight ratio of 93.5/1.5/5, and this mixture was referred to as liquid crystal composition MLC-U.

Liquid crystal composition LC-1-1, P-5-1, and M-1 were mixed at a weight ratio of 90/4/6, and this mixture was referred to as liquid crystal composition MLC-V.

Liquid crystal composition LC-1-1, P-7-1, and M-1 were mixed at a weight ratio of 91.5/1.5/7, and this mixture was referred to as liquid crystal composition MLC-X.

Liquid crystal composition LC-1-1, C-2, and M-1 were mixed at a weight ratio of 93/2/5, and this mixture was referred to as liquid crystal composition MLC-C2.

### <Preparation of polymer/liquid crystal composite material PDLC-D>

Polymer/liquid crystal composite material PDLC-D was prepared by the following procedure.
(1) Two glass substrate each having a transparent conductive film electrode, on which no alignment treatment was performed, were disposed so that the electrodes were on the inside with a distance between the glass substrates of 10 µm, and liquid crystal composition MLC-D was inserted between the glass substrates to prepare a cell.
(2) The cell was heated until liquid crystal composition MLC-D reached an isotropic phase, and then cooled to room temperature. At this time, it was confirmed by phase observation under a polarization microscope that the liquid crystals in the cell were aligned perpendicular to the substrate.
(3) The cell was irradiated with light with a wavelength of 365 nm for 60 seconds at 18 mWcm⁻² to polymerize the liquid crystal composition in the cell.
(4) It was confirmed that the material between the glass substrates after the polymerization reaction retained a nematic liquid crystal phase.

The glass substrate used was KSSZ-10/A107P1NSS05 manufactured by EHC. Co., Ltd. By applying voltage across the electrodes of the glass substrates, it was possible to apply an electric field to liquid crystal composition MLC-D between the glass substrates.

The transparent conductive film was ITO. The size of the transparent conductive film was 10 mm × 10 mm. A potential difference was generated between the two substrates, and it was thus possible to apply an electric field to the inserted liquid crystal composition.

In the same manner as for PDLC-D, polymer/liquid crystal composite material PDLC-V and Reference Example 2 were prepared using liquid crystal composition MLC-V and liquid crystal composition MLC-C2.

### <Preparation of polymer/liquid crystal composite material PDLC-S>

(1) Two glass substrate each having a transparent conductive film electrode, on which no alignment treatment was performed, were disposed so that the electrodes were on the inside with a distance between the glass substrates of 5 µm, and liquid crystal composition MLC-S was inserted between the glass substrates to prepare a cell.
(2) The cell was heated until liquid crystal composition MLC-S reached an isotropic phase, and then cooled to room temperature. At this time, it was confirmed by phase observation under a polarization microscope that the liquid crystals in the cell were aligned perpendicular to the substrate.
(3) The cell was irradiated with light with a wavelength of 365 nm for 60 seconds at 18 mWcm⁻² to polymerize the liquid crystal composition in the cell.
(4) It was confirmed that the material between the glass substrates after the polymerization reaction retained a nematic liquid crystal phase.

The glass substrate used was KSSZ-5/A107P1NSS05 manufactured by EHC. Co., Ltd. By applying voltage across the electrodes of the glass substrates, it was possible to apply an electric field to liquid crystal composition MLC-D between the glass substrates.

The transparent conductive film was ITO. The size of the transparent conductive film was 10 mm × 10 mm. A potential difference was generated between the two substrates, and it was thus possible to apply an electric field to the inserted liquid crystal composition.

In the same manner as for PDLC-S, polymer/liquid crystal composite materials PDLC-T, PDLC-U, and PDLC-X were prepared using liquid crystal composition MLC-T, liquid crystal composition MLC-U, and liquid crystal composition MLC-X.

### <Electro-optical characteristics of polymer/liquid crystal composite material PDLC-D>

In the measurement of the electro-optical characteristics of PDLC-D, liquid crystal composite material PDLC-A was replaced with PDLC-B, and the voltage across the two transparent conductive film electrodes was raised from 0 to 60 V and lowered from 60 V to 0 V. At this time, the transmitted light intensity was measured for each applied voltage, and it was confirmed that applying a square wave of 20 V causes polymer/liquid crystal composite material PDLC-D to be driven in a reverse mode. It was confirmed in the same manner as for PDLC-D that polymer/liquid crystal composite material PDLC-V is driven in a reverse mode. It was not possible to confirm in the same manner as for PDLC-D that Reference Example 2 is driven in a reverse mode.

### <Electro-optical characteristics of polymer/liquid crystal composite material PDLC-S>

In the measurement of the electro-optical characteristics of PDLC-S, liquid crystal composite material PDLC-A was replaced with PDLC-S, and the voltage across the two transparent conductive film electrodes was raised from 0 to 60 V and lowered from 60 V to 0 V. At this time, the transmitted light intensity was measured for each applied voltage, and it was confirmed that applying a square wave of 20 V causes polymer/liquid crystal composite material PDLC-S to be driven in a reverse mode. It was confirmed in the same manner as for PDLC-S that the polymer/liquid crystal composite materials PDLC-T, PDLC-U, and PDLC-X are driven in a reverse mode.

### <Measurement of haze and parallel light transmittance of polymer/liquid crystal composite material PDLC-D>

Polymer/liquid crystal composite material PDLC-D was placed in a haze meter so that the source light was perpendicular to the surface of a cell. A voltage of 0 to 60 V was applied to the cell, and the haze and the parallel light transmittance were measured.

The haze when voltage was applied was measured, and shown in Table 9. The applied voltage was 50 V.

In the same manner as for PDLC-D, the haze and the parallel light transmittance of the measurement cells of PDLC-T, PDLC-U, and PDLC-X when no voltage was applied and when voltage was applied were measured, and it was confirmed that the haze changed when voltage was applied. The alignment state when no voltage was applied and the presence or absence of a haze change due to voltage application are shown in Table 8.

### <Measurement of haze and parallel light transmittance of polymer/liquid crystal composite material PDLC-V>

Polymer/liquid crystal composite material PDLC-V was placed in a haze meter so that the source light was perpendicular to the surface of a cell. A voltage of 0 to 60 V was applied to the cell, and the haze and the parallel light transmittance were measured.

The haze when no voltage was applied to a measurement cell and the haze when no voltage was applied were measured and are shown in Table 9. The applied voltage was 40 V.

In the same manner as for PDLC-V, the haze and the parallel light transmittance of the measurement cell of PDLC-S when no voltage was applied and when voltage was applied were measured, and it was confirmed that the haze changed when voltage was applied.

In the same manner as for PDLC-D, the haze and the parallel light transmittance of a measurement cell of Reference Example 2 when no voltage was applied and when voltage was applied were measured, but it was not possible to confirm that the haze changed when voltage was applied. The alignment state when no voltage was applied and the presence or absence of a haze change due to voltage application are shown in Table 8.

### <Preparation of liquid crystal composition LC-2>

Liquid crystal composition LC-2 was prepared by mixing the compounds shown in Table 4. Those skilled in the art can synthesize the compounds shown in Table 4 with reference to the methods described in, for example, JP02503443A, JP20008040A, and Molecular Crystals and Liquid Crystals, Volume 195, Pages 221-37, 1991.

**[Table 4]**

| LC-2-1 | Composition proportion of compound |
|---|---|
| 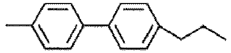 | 4 |
| 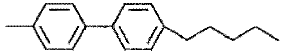 | 2 |
| 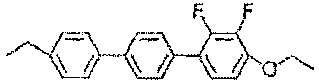 | 6 |
| 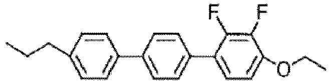 | 10 |
| 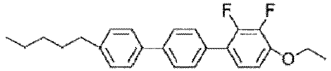 | 10 |
| 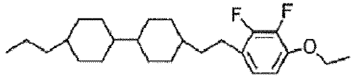 | 6 |
| 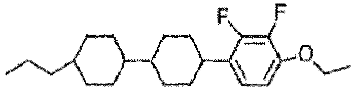 | 7 |
| 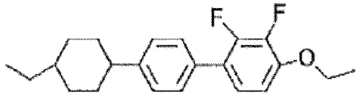 | 3 |
| 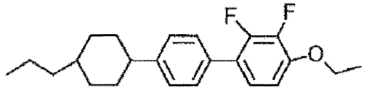 | 7 |
| 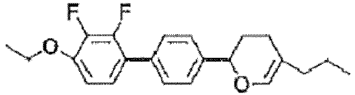 | 10 |
| 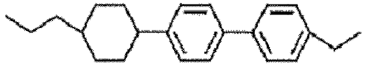 | 8 |
| 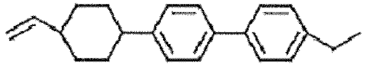 | 9 |
| 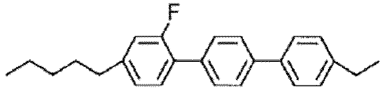 | 9 |
| 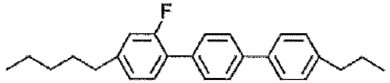 | 9 |
| 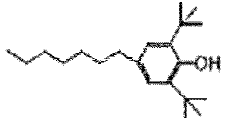 | 0.015 |

### (Example 2)

### <Preparation of liquid crystal composition LC-2-1>

Liquid crystal composition LC-2 and Irgacure (TM) 651 were mixed at a weight ratio of 100/0.3, and this mixture was referred to as liquid crystal composition LC-1-1. Irgacure (TM) 651 is 2,2-dimethoxy-1,2-diphenylethan-1-one.

The phase transition temperature of liquid crystal composition LC-2 from a nematic phase to an isotropic liquid was 98.4°C. The transition temperature was measured while heating the composition at a rate of 2.0°C/min.

Physical property data of the liquid crystal composition (LC-2) is shown in Table 5.

**[Table 5]**

| Name of liquid crystal composition | Liquid crystal composition (LC-2) |
|---|---|
| Transition temperature from liquid crystal phase to isotropic liquid phase/°C | 98.4°C |
| Δn | 0.185 |
| Ordinary light refractive index | 1.507 |
| Extraordinary light refractive index | 1.692 |
| Δε | -3.25 |
| ε∥ | 3.69 |
| ε^{⊥} | 6.94 |

### <Liquid crystal materials>

Liquid crystal composition LC-2-1, (1)-1, and M-2 were mixed at a weight ratio of 94/2/4, and this mixture was referred to as liquid crystal composition MLC-C.

Liquid crystal composition LC-2-1, (2)-1, M-2, and M-3 were mixed at a weight ratio of 92/2/3/3, and this mixture was referred to as liquid crystal composition MLC-E.

Liquid crystal composition LC-2-1, P-1-3, M-1, and M-5 were mixed at a weight ratio of 92/2/3/3, and this mixture was referred to as liquid crystal composition MLC-I.

Liquid crystal composition LC-2-1, P-1-4, M-1, and M-6 were mixed at a weight ratio of 91/2/4/3, and this mixture was referred to as liquid crystal composition MLC-J.

Liquid crystal composition LC-2-1, P-1-5, and M-1 were mixed at a weight ratio of 91/2/7, and this mixture was referred to as liquid crystal composition MLC-K.

Liquid crystal composition LC-2-1, P-1-7, M-2, and M-7 were mixed at a weight ratio of 90/3/5/2, and this mixture was referred to as liquid crystal composition MLC-M.

Liquid crystal composition LC-2-1, P-1-9, M-2, and M-4 were mixed at a weight ratio of 84/5/6/5, and this mixture was referred to as liquid crystal composition MLC-P.

Liquid crystal composition LC-2-1, P-2-2, M-1, and M-9 were mixed at a weight ratio of 93/1/5/1, and this mixture was referred to as liquid crystal composition MLC-R.

Liquid crystal composition LC-2-1, P-6-1, and M-2 were mixed at a weight ratio of 93/2/5, and this mixture was referred to as liquid crystal composition MLC-W.

### <Preparation of polymer/liquid crystal composite material PDLC-C>

Polymer/liquid crystal composite material PDLC-C was prepared by the following procedure.
(1) Two glass substrates each having a transparent conductive film electrode, on which no alignment treatment was performed, were disposed so that the electrodes were on the inside with a distance between the glass substrates of 5 µm, and liquid crystal composition MLC-C was inserted between the glass substrates to prepare a cell.
(2) The cell was heated until liquid crystal composition MLC-C reached an isotropic phase, and then cooled to room temperature. At this time, it was confirmed by phase observation under a polarization microscope that the liquid crystals in the cell were aligned perpendicular to the substrate.
(3) The cell was irradiated with light with a wavelength of 365 nm for 60 seconds at 18 mWcm⁻² to polymerize the liquid crystal composition in the cell.
(4) It was confirmed that the material between the glass substrates after the polymerization reaction retained a nematic liquid crystal phase.

The glass substrate used was KSSZ-5/A107P1NSS05 manufactured by EHC. Co., Ltd. By applying voltage across the electrodes of the glass substrates, it was possible to apply an electric field to liquid crystal composition MLC-D between the glass substrates.

The transparent conductive film was ITO. The size of the transparent conductive film was 10 mm × 10 mm. A potential difference was generated between the two substrates, and it was thus possible to apply an electric field to the inserted liquid crystal composition.

In the same manner as for PDLC-C, polymer/liquid crystal composite materials PDLC-E, PDLC-J, PDLC-K, and PDLC-W were prepared using liquid crystal composition MLC-E, liquid crystal composition MLC-J, liquid crystal composition MLC-K, and liquid crystal composition MLC-W.

### <Preparation of polymer/liquid crystal composite material PDLC-I>

(1) Two glass substrates each having a transparent conductive film electrode, on which no alignment treatment was performed, were disposed so that the electrodes were on the inside with a distance between the glass substrates of 10 µm, and liquid crystal composition MLC-I was inserted between the glass substrates to prepare a cell.
(2) The cell was heated until liquid crystal composition MLC-I reached an isotropic phase, and then cooled to room temperature. At this time, it was confirmed by phase observation under a polarization microscope that the liquid crystals in the cell were aligned perpendicular to the substrate.
(3) The cell was irradiated with light with a wavelength of 365 nm for 60 seconds at 18 mWcm⁻² to polymerize the liquid crystal composition in the cell.
(4) It was confirmed that the material between the glass substrates after the polymerization reaction retained a nematic liquid crystal phase.

The glass substrate used was KSSZ-10/A107P1NSS05 manufactured by EHC. Co., Ltd. By applying voltage across the electrodes of the glass substrates, it was possible to apply an electric field to liquid crystal composition MLC-D between the glass substrates.

The transparent conductive film was ITO. The size of the transparent conductive film was 10 mm × 10 mm. A potential difference was generated between the two substrates, and it was thus possible to apply an electric field to the inserted liquid crystal composition.

In the same manner as for PDLC-I, polymer/liquid crystal composite materials PDLC-M, PDLC-P, and PDLC-R were prepared using liquid crystal composition MLC-M, liquid crystal composition MLC-P, and liquid crystal composition MLC-R.

### <Electro-optical characteristics of polymer/liquid crystal composite material PDLC-C>

In the measurement of the electro-optical characteristics of PDLC-C, liquid crystal composite material PDLC-A was replaced with PDLC-C, and the voltage across the two transparent conductive film electrodes was raised from 0 to 60 V and lowered from 60 V to 0 V. At this time, the transmitted light intensity was measured for each applied voltage, and it was confirmed that applying a square wave of 20 V causes polymer/liquid crystal composite material PDLC-C to be driven in a reverse mode.

It was confirmed in the same manner as for PDLC-C that the polymer/liquid crystal composite materials PDLC-E, PDLC-J, PDLC-K, and PDLC-W are driven in a reverse mode.

### <Electro-optical characteristics of polymer/liquid crystal composite material PDLC-M>

In the measurement of the electro-optical characteristics of PDLC-I, liquid crystal composite material PDLC-A was replaced with PDLC-I, and the voltage across the two transparent conductive film electrodes was raised from 0 to 60 V and lowered from 60 V to 0 V. At this time, the transmitted light intensity was measured for each applied voltage, and it was confirmed that applying a square wave of 20 V causes polymer/liquid crystal composite material PDLC-D to be driven in a reverse mode.

It was confirmed in the same manner as for PDLC-M that the polymer/liquid crystal composite materials PDLC-I, PDLC-P, and PDLC-R are driven in a reverse mode.

### <Measurement of haze and parallel light transmittance of polymer/liquid crystal composite material PDLC-C>

Polymer/liquid crystal composite material PDLC-C was placed in a haze meter so that the source light was perpendicular to the surface of a cell. A voltage of 0 to 60 V was applied to the cell, and the haze and the parallel light transmittance were measured.

The haze when no voltage was applied to a measurement cell and the haze when no voltage was applied were measured and are shown in Table 9. The applied voltage was 40 V.

In the same manner as for PDLC-C, the haze and the parallel light transmittance of the measurement cells of PDLC-E, PDLC-J, PDLC-K, and PDLC-W when no voltage was applied and when voltage was applied were measured, and it was confirmed that the haze changed when voltage was applied. The haze when no voltage was applied to the measurement cell of PDLC-E and PDLC-K and the haze when no voltage was applied were measured and are shown in Table 9. The voltage applied to each of the cells was 40 V. The alignment state when no voltage was applied and the presence or absence of a haze change due to voltage application are shown in Table 8.

### <Measurement of haze and parallel light transmittance of polymer/liquid crystal composite material PDLC-M>

Polymer/liquid crystal composite material PDLC-M was placed in a haze meter so that the source light was perpendicular to the surface of a cell. A voltage of 0 to 60 V was applied to the cell, and the haze and the parallel light transmittance were measured.

The haze when no voltage was applied to the measurement cell and the haze when no voltage was applied were measured and are shown in Table 9. The applied voltage was 40 V.

In the same manner as for PDLC-M, the haze and the parallel light transmittance of the measurement cells of PDLC-I, PDLC-P, and PDLC-R when no voltage was applied and when voltage was applied were measured, and it was confirmed that the haze changed when voltage was applied. The haze when no voltage was applied to the measurement cell of PDLC-R and the haze when no voltage was applied were measured and are shown in Table 9. The applied voltage during measurement was 40 V.

### <Preparation of liquid crystal composition LC-3-1>

Liquid crystal composition LC-3 was prepared by mixing the compounds shown in Table 6. Those skilled in the art can synthesize the compounds shown in Table 6 with reference to the methods described in, for example, JP02503443A, JP20008040A, and Molecular Crystals and Liquid Crystals, Volume 195, Pages 221-37, 1991.

**[Table 6]**

| LC-3-1 | Compositional proportion of compound |
|---|---|
| 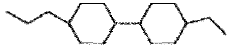 | 4 |
| 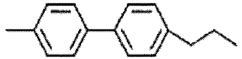 | 4 |
| 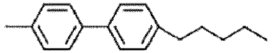 | 3 |
| 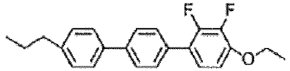 | 6 |
| 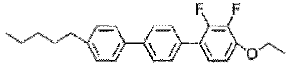 | 6 |
| 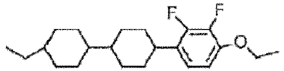 | 3 |
| 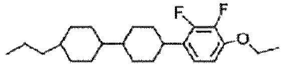 | 4 |
| 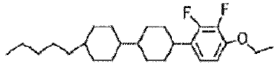 | 5 |
| 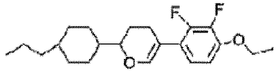 | 9 |
| 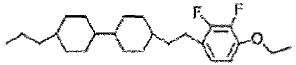 | 9 |
| 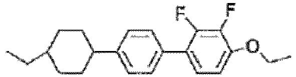 | 3 |
| 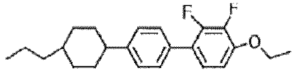 | 6 |
| 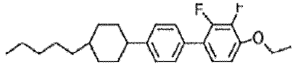 | 4 |
| 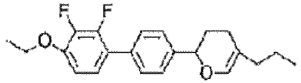 | 6 |
| 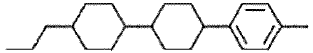 | 4 |
| 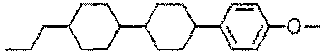 | 3 |
| 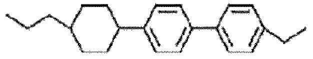 | 5 |
| 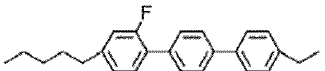 | 6 |
| 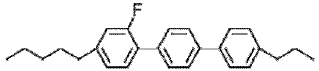 | 6 |
| 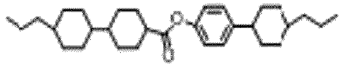 | 4 |
| 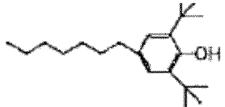 | 0.015 |

### (Example 3)

### <Preparation of liquid crystal composition LC-3-1>

Liquid crystal composition LC-3 and Irgacure (TM) 651 were mixed at a weight ratio of 100/0.3, and this mixture was referred to as liquid crystal composition LC-1-1. Irgacure (TM) 651 is 2,2-dimethoxy-1,2-diphenylethan-1-one.

The phase transition temperature of liquid crystal composition LC-3 from a nematic phase to an isotropic liquid was 122.8°C. The transition temperature was measured while heating the composition at a rate of 2.0°C/min.

**[Table 7]**

| Name of liquid crystal composition | Liquid crystal composition (LC-3) |
|---|---|
| Transition temperature from liquid crystal phase to isotropic liquid phase/°C | 122.8 °C |
| Δn | 0.1569 |
| Ordinary light refractive index | 1.507 |
| Extraordinary light refractive index | 1.692 |
| Δε | -3.50 |

### <Liquid crystal materials>

Liquid crystal composition LC-3-1, (2)-1, M-1, and M-4 were mixed at a weight ratio of 91/2/4/3, and this mixture was referred to as liquid crystal composition MLC-F.

Liquid crystal composition LC-3-1, P-1-1, and M-2 were mixed at a weight ratio of 92/2/6, and this mixture was referred to as liquid crystal composition MLC-G.

Liquid crystal composition LC-3-1, P-1-2, M-1, and M-4 were mixed at a weight ratio of 88/2/6/4, and this mixture was referred to as liquid crystal composition MLC-H.

Liquid crystal composition LC-3-1, P-1-6, M-1, and M-4 were mixed at a weight ratio of 85/3/6/6, and this mixture was referred to as liquid crystal composition MLC-L.

Liquid crystal composition LC-3-1, P-1-8, M-4, and M-8 were mixed at a weight ratio of 89/3/5/3, and this mixture was referred to as liquid crystal composition MLC-N.

Liquid crystal composition LC-3-1, P-2-1, M-4, and M-7 were mixed at a weight ratio of 94/2/4/2, and this mixture was referred to as liquid crystal composition MLC-Q.

Liquid crystal composition LC-3-1, C-3, and M-1 were mixed at a weight ratio of 93/2/5, and this mixture was referred to as liquid crystal composition MLC-C3.

### <Preparation of polymer/liquid crystal composite material PDLC-F>

(1) Two glass substrates each having a transparent conductive film electrode, on which no alignment treatment was performed, were disposed so that the electrodes were on the inside with a distance between the glass substrates of 10 µm, and liquid crystal composition MLC-F was inserted between the glass substrates to prepare a cell.
(2) The cell was heated until liquid crystal composition MLC-F reached an isotropic phase, and then cooled to room temperature. At this time, it was confirmed by phase observation under a polarization microscope that the liquid crystals in the cell were aligned perpendicular to the substrate.
(3) The cell was irradiated with light with a wavelength of 365 nm for 60 seconds at 18 mWcm⁻² to polymerize the liquid crystal composition in the cell.
(4) It was confirmed that the material between the glass substrates after the polymerization reaction retained a nematic liquid crystal phase.

The glass substrate used was KSSZ-10/A107P1NSS05 manufactured by EHC. Co., Ltd. By applying voltage across the electrodes of the glass substrates, it was possible to apply an electric field to liquid crystal composition MLC-D between the glass substrates.

The transparent conductive film was ITO. The size of the transparent conductive film was 10 mm × 10 mm. A potential difference was generated between the two substrates, and it was thus possible to apply an electric field to the inserted liquid crystal composition.

In the same manner as for PDLC-F, polymer/liquid crystal composite materials PDLC-G, PDLC-H, PDLC-L, PDLC-N, PDLC-Q, and Reference Example 3 were prepared using liquid crystal composition MLC-G, liquid crystal composition MLC-H, liquid crystal composition MLC-L, liquid crystal composition MLC-N, liquid crystal composition MLC-Q, and liquid crystal composition MLC-C3.

### <Electro-optical characteristics of polymer/liquid crystal composite material PDLC-F>

In the measurement of the electro-optical characteristics of PDLC-F, liquid crystal composite material PDLC-A was replaced with PDLC-F, and the voltage across the two transparent conductive film electrodes was raised from 0 to 60 V and lowered from 60 V to 0 V. At this time, the transmitted light intensity was measured for each applied voltage, and it was confirmed that applying a square wave of 20 V caused polymer/liquid crystal composite material PDLC-F to be driven in a reverse mode.

It was confirmed in the same manner as for PDLC-F that the polymer/liquid crystal composite materials PDLC-G, PDLC-H, PDLC-L, PDLC-N, and PDLC-Q are driven in a reverse mode.

### <Measurement of haze and parallel light transmittance of polymer/liquid crystal composite material PDLC-F>

Polymer/liquid crystal composite material PDLC-F was placed in a haze meter so that the source light was perpendicular to the surface of a cell. A voltage of 0 to 60 V was applied to the cell, and the haze and the parallel light transmittance were measured.

The haze when no voltage was applied to a measurement cell and the haze when no voltage was applied were measured and are shown in Table 9. The applied voltage was 60 V.

In the same manner as for PDLC-F, the haze and the parallel light transmittance of the measurement cells of PDLC-G, PDLC-H, PDLC-L, PDLC-N, PDLC-Q, and Reference Example 3 when no voltage was applied and when voltage was applied were measured, and it was confirmed that the haze changed when voltage was applied. As for Reference Example 3, the haze when no voltage was applied was high, the haze when voltage was applied was low, and it was thus not possible to confirm sufficient characteristics as a reverse mode liquid crystal device. The haze when no voltage was applied to the measurement cells of PDLC-G, PDLC-N, and Reference Example and the haze when no voltage was applied were measured and are shown in Table 9. The respective applied voltages were 50 V, 60 V, and 60 V. The alignment state when no voltage was applied and the presence or absence of a haze change due to voltage application are shown in Table 8.

**[Table 8]**

| Polymer/liquid crystal composite material | Liquid crystal composition | | Perpendicular alignment agent | | Polymerizable compound (1) | | Polymerizable compound (2) | | Alignment state of light control layer when no voltage applied | Haze change between voltage application and no voltage application |
|---|---|---|---|---|---|---|---|---|---|---|
| | Compound | Amount added wt% | Compound | Amount added wt% | Compound | Amount added wt% | Compound | Amount added wt% | | |
| PDLC-A | LC-1-1 | 94 | (1)-1 | 2 | M-1 | 4 | | | Perpendicular alignment | Haze changed |
| PDLC-B | LC-1-1 | 90 | (1)-1 | 3 | M-2 | 7 | | | Perpendicular alignment | Haze changed |
| PDLC-C | LC-2-1 | 94 | (1)-1 | 2 | M-2 | 4 | | | Perpendicular alignment | Haze changed |
| PDLC-D | LC-1-1 | 93 | (2)-1 | 2 | M-1 | 5 | | | Perpendicular alignment | Haze changed |
| PDLC-E | LC-2-1 | 92 | (2)-1 | 2 | M-2 | 3 | M-3 | 3 | Perpendicular alignment | Haze changed |
| PDLC-F | LC-3-1 | 91 | (2)-1 | 2 | M-1 | 4 | M-4 | 3 | Perpendicular alignment | Haze changed |
| PDLC-G | LC-3-1 | 92 | P-1-1 | 2 | M-2 | 6 | | | Perpendicular alignment | Haze changed |
| PDLC-H | LC-3-1 | 88 | P-1-2 | 2 | M-1 | 6 | M-4 | 4 | Perpendicular alignment | Haze changed |
| PDLC-I | LC-2-1 | 92 | P-1-3 | 2 | M-1 | 3 | M-5 | 3 | Perpendicular alignment | Haze changed |
| PDLC-J | LC-2-1 | 91 | P-1-4 | 2 | M-1 | 4 | M-6 | 3 | Perpendicular alignment | Haze changed |
| PDLC-K | LC-2-1 | 91 | P-1-5 | 2 | M-1 | 7 | | | Perpendicular alignment | Haze changed |
| PDLC-L | LC-3-1 | 85 | P-1-6 | 3 | M-1 | 6 | M-4 | 6 | Perpendicular alignment | Haze changed |
| PDLC-M | LC-2-1 | 90 | P-1-7 | 3 | M-2 | 5 | M-7 | 2 | Perpendicular alignment | Haze changed |
| PDLC-N | LC-3-1 | 89 | P-1-8 | 3 | M-4 | 5 | M-8 | 3 | Perpendicular alignment | Haze changed |
| PDLC-P | LC-2-1 | 84 | P-1-9 | 5 | M-2 | 6 | M-4 | 5 | Perpendicular alignment | Haze changed |
| PDLC-Q | LC-3-1 | 94 | P-2-1 | 2 | M-4 | 4 | M-7 | 2 | Perpendicular alignment | Haze changed |
| PDLC-R | LC-2-1 | 93 | P-2-2 | 1 | M-1 | 5 | M-9 | 1 | Perpendicular alignment | Haze changed |
| PDLC-S | LC-1-1 | 93 | P-3-1 | 1 | M-2 | 5 | M-5 | 1 | Perpendicular alignment | Haze changed |
| PDLC-T | LC-1-1 | 92.5 | P-4-1 | 1.5 | M-2 | 6 | | | Perpendicular alignment | Haze changed |
| PDLC-U | LC-1-1 | 93.5 | P-4-2 | 1.5 | M-2 | 5 | | | Perpendicular alignment | Haze changed |
| PDLC-V | LC-1-1 | 90 | P-5-1 | 4 | M-1 | 6 | | | Perpendicular alignment | Haze changed |
| PDLC-W | LC-2-1 | 93 | P-6-1 | 2 | M-2 | 5 | | | Perpendicular alignment | Haze changed |
| PDLC-X | LC-1-1 | 91.5 | P-7-1 | 1.5 | M-1 | 7 | | | Perpendicular alignment | Haze changed |
| Reference Example 2 | LC-1-1 | 91 | C2 | 4 | M-1 | 5 | | | × (Thick haze) | No haze change |
| Reference Example 3 | LC-3-1 | 93 | C3 | 2 | M-1 | 5 | | | × (Thick haze) | Small haze change |

**[Table 9]**

| Polymer/liquid crystal composite material | Perpendicular alignment | Haze% | | Cell voltage when voltage applied (V) | Cell thickness (µm) |
|---|---|---|---|---|---|
| | | Voltage OFF | Voltage ON | | |
| PDLC-A | ○ | 0.48 | 91.46 | 50 | 10 |
| PDLC-B | ○ | 0.96 | 78.48 | 60 | 10 |
| PDLC-C | ○ | 2.6 | 81 | 40 | 5 |
| PDLC-D | ○ | 0.7 | 93 | 50 | 10 |
| PDLC-E | ○ | 4.5 | 72 | 40 | 5 |
| PDLC-F | ○ | 3.6 | 82 | 60 | 10 |
| PDLC-G | ○ | 1.4 | 86 | 50 | 10 |
| PDLC-K | ○ | 3.5 | 86 | 40 | 5 |
| PDLC-M | ○ | 3.4 | 71 | 40 | 10 |
| PDLC-N | ○ | 5.4 | 90 | 60 | 10 |
| PDLC-R | ○ | 14 | 81 | 40 | 10 |
| PDLC-V | ○ | 2.8 | 87 | 40 | 10 |
| Reference Example 2 | × (Crystal precipitation) | 36 | 38 | 60 | 10 |
| Reference Example 3 | × (Thick haze) | 32 | 42 | 60 | 10 |

Compounds (C-4) and (C-5) below were used as perpendicular alignment agents.

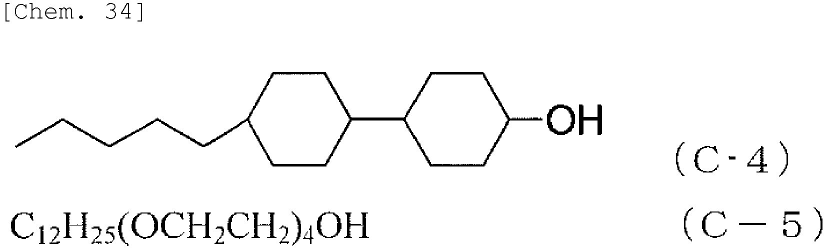

Those skilled in the art can synthesize compound (C-4) by the method described in, for example, International Publication No. WO 2017-130566A. Compound (C-5) can be purchased from Sigma Aldrich.

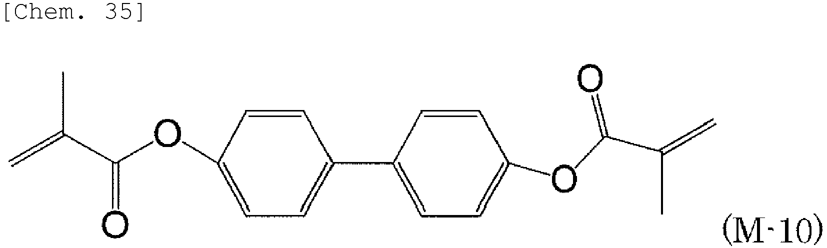

Those skilled in the art can synthesize compound (M-10) as a polymerizable compound by the method described in, for example, Japanese Patent Publication No. 06-086408 or Japanese Patent Publication No. 01-050689.

### <Reference Example 4>

### <Liquid crystal material>

Liquid crystal composition LC-1-1, C-4, and M-10 were mixed at a weight ratio of 97.8/1.7/0.5, and this mixture was referred to as liquid crystal composition MLC-C4.

### <Reference Example 5>

Liquid crystal composition LC-1-1, C-5, and M-1 were mixed at a weight ratio of 90/0.0009/10, and this mixture was referred to as liquid crystal composition MLC-C5.

### <Preparation of polymer/liquid crystal composite material of Reference Example 4>

(1) Two glass substrates each having a transparent conductive film electrode, on which no alignment treatment was performed, were disposed so that the electrodes were on the inside with a distance between the glass substrates of 10•/SUB>m, and liquid crystal composition MLC-C4 was inserted between the glass substrates to prepare a cell.
(2) The cell was heated until liquid crystal composition MLC-C4 reached an isotropic phase, and then cooled to room temperature. At this time, it was confirmed by phase observation under a polarization microscope that the liquid crystals in the cell were aligned perpendicular to the substrate.
(3) The cell was irradiated with light with a wavelength of 365 nm for 60 seconds at 18 mWcm⁻² to polymerize the liquid crystal composition in the cell.
(4) It was confirmed that the material between the glass substrates after the polymerization reaction retained a nematic liquid crystal phase.

The glass substrate used was KSSZ10/A107P1NSS05 manufactured by EHC. Co., Ltd. By applying voltage across the electrodes of the glass substrates, it was possible to apply an electric field to liquid crystal composition MLC-C4 between the glass substrates.

The transparent conductive film is ITO. The size of the transparent conductive film is 10 mm × 10 mm. A potential difference is generated between the two substrates, and it is thus possible to apply an electric field to the inserted liquid crystal composition.

In the same manner as in Reference Example 4, the polymer/liquid crystal composite material of Reference Example 5 was prepared using liquid crystal composition MLC-C5.

### <Electro-optical characteristics of polymer/liquid crystal composite material of Reference Example 4>

In the measurement of the electro-optical characteristics of Reference Example 4, liquid crystal composite material PDLC-A was replaced with Reference Example 4, and the voltage across the two transparent conductive film electrodes was raised from 0 to 60 V and lowered from 60 V to 0 V. At this time, the transmitted light intensity was measured for each applied voltage, and it was not possible to confirm that applying a square wave of 20 V causes the polymer/liquid crystal composite material of Reference Example 4 to be driven in a reverse mode. It was also not possible to confirm in the same manner as in Reference Example 4 that Reference Example 5 is driven in a reverse mode.

### <Measurement of haze and parallel light transmittance of polymer/liquid crystal composite material of Reference Example 4>

The polymer/liquid crystal composite material of Reference Example 4 was placed in a haze meter so that the source light was perpendicular to the surface of a cell. A voltage of 0 to 60 V was applied to the cell, and the haze and the parallel light transmittance were measured.

Although the haze of a measurement cell when no voltage was applied to the measurement cell and the haze when no voltage was applied were measured, it was not possible to confirm a haze change of the measurement cell resulting from the applied voltage between 0 to 60 V.

In the same manner as in Reference Example 4, the haze and the parallel light transmittance of the measurement cell of Reference Example 5 when no voltage was applied and when voltage was applied were measured. The cell of Reference Example 5 did not show a perpendicularly aligned state when no voltage was applied, and it was not possible to confirm a haze change of the measurement cell resulting from the applied voltage between 0 to 60 V.

### Reference Signs List

- 1: Substrate having electrode layer
- 2: Liquid crystal material
- 3: Transparent material

## Claims

1. A reverse mode liquid crystal device, **characterized in that** the reverse mode liquid crystal device comprising a light control layer and at least a pair of electrodes, wherein
the light control layer comprises a polymerization product of a polymerizable material comprising:
(A) a liquid crystal composition,
(B) a perpendicular alignment agent, and
(C) at least one polymerizable compound selected from polymer forming monomers and polymer forming oligomers.

2. The liquid crystal device according to claim 1, wherein the light control layer has a content of a component derived from the perpendicular alignment agent (B) in a range of 0.1 to 10 weight% based on the entire light control layer.

3. The liquid crystal device according to claim 1, wherein the perpendicular alignment agent (B) is an organic compound having a polar group at a molecular terminal thereof and having 8 or more carbon atoms.

4. The liquid crystal device according to claim 3, wherein the perpendicular alignment agent (B) has, as the polar group at a molecular terminal, at least one of -OH and -N(R²)₂ wherein R² represents a hydrogen atom or a methyl group.

5. The liquid crystal device according to any one of claims 1 to 4, wherein the perpendicular alignment agent (B) is a non-polymerizable perpendicular alignment agent.

6. The liquid crystal device according to claim 5, wherein the non-polymerizable perpendicular alignment agent is at least one compound selected from General Formulae (P-1) to (P-7): 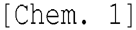 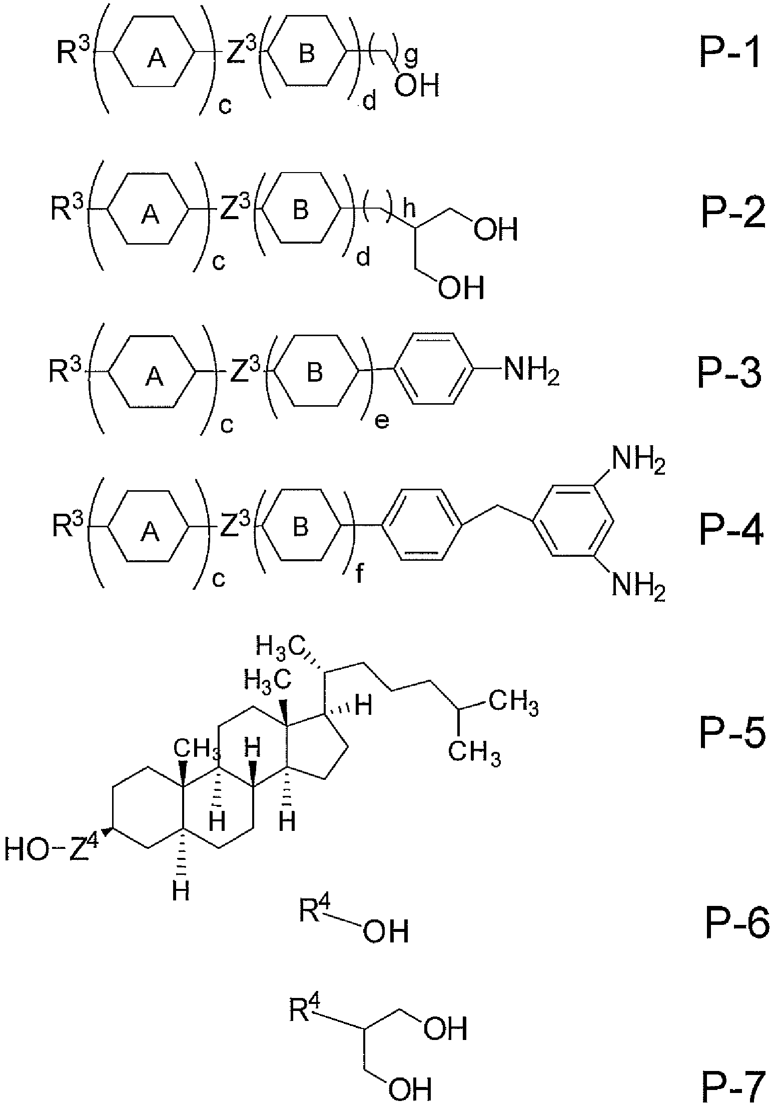 wherein R³ is a hydrogen atom, a halogen atom, an alkyl group having 1 to 18 carbon atoms, an alkoxy group having 1 to 18 carbon atoms, an alkenyl group having 2 to 18 carbon atoms, an alkyl group having 1 to 18 carbon atoms in which at least one hydrogen atom is replaced with a fluorine atom or a chlorine atom, or an alkenyl group having 2 to 18 carbon atoms in which at least one hydrogen atom is replaced with a fluorine atom or a chlorine atom;
R⁴ is a hydrogen atom, a halogen atom, an alkyl group having 8 to 18 carbon atoms, an alkenyl group having 8 to 18 carbon atoms, an alkyl group having 8 to 18 carbon atoms in which at least one hydrogen atom is replaced with a fluorine atom or a chlorine atom, or an alkenyl group having 8 to 18 carbon atoms in which at least one hydrogen atom is replaced with a fluorine atom or a chlorine atom;
ring A and ring B are independently 1,4-cyclohexylene or 1,4-phenylene, and in these rings, at least one hydrogen atom is optionally replaced with a fluorine atom, a chlorine atom, an alkyl group having 1 to 12 carbon atoms, an alkoxy group having 1 to 12 carbon atoms, or an alkyl group having 1 to 12 carbon atoms in which at least one hydrogen atom is replaced with a fluorine atom or a chlorine atom; Z³ is a single bond or - (CH₂)₂-;
Z⁴ is a single bond or an alkylene group having 1 to 6 carbon atoms, and in this alkylene group, at least one -CH₂-is optionally replaced with -O-, and at least one -(CH₂)₂- is optionally replaced with -CH=CH-;
c is 0, 1, 2, or 3; d is 0, 1, 2, or 3; c + d is 2, 3, or 4;
e is 0, 1, or 2; c + e is 1, 2, or 3;
f is 0, 1, or 2; c + f is 0, 1, or 2; g is an integer of 0 to 6; and h is an integer of 1 to 6.

7. The liquid crystal device according to claim 5 or 6, wherein the light control layer has a content of a component derived from the non-polymerizable perpendicular alignment agent in a range of 0.5 to 5 weight%, a content of a component derived from the polymerizable compound (C) in a range of 5 to 45 weight%, and a content of the liquid crystal composition (A) in a range of 50 weight% to 94.5 weight%.

8. The liquid crystal device according to any one of claims 1 to 4, wherein the perpendicular alignment agent (B) is a polymerizable perpendicular alignment agent, provided that the polymerizable perpendicular alignment agent is different from the polymerizable compound (C).

9. The liquid crystal device according to claim 8, wherein the polymerizable perpendicular alignment agent is at least one compound selected from compounds represented by General Formula (1): 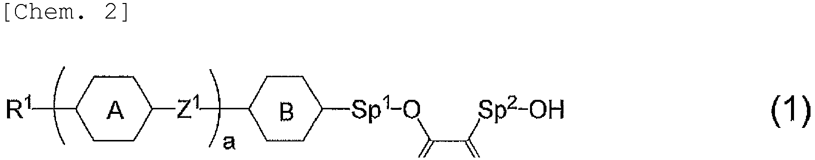 in Formula (1), R¹ is a hydrogen atom, a halogen atom, an alkyl group having 1 to 12 carbon atoms, an alkoxy group having 1 to 12 carbon atoms, an alkenyl group having 2 to 12 carbon atoms, an alkyl group having 1 to 12 carbon atoms in which at least one hydrogen atom is replaced with a fluorine atom or a chlorine atom, or an alkenyl group having 2 to 12 carbon atoms in which at least one hydrogen atom is replaced with a fluorine atom or a chlorine atom;
ring A and ring B are independently 1,4-cyclohexylene, 1,4-phenylene, naphthalene-2,6-diyl, tetrahydropyran-2,5-diyl, 1,3-dioxane-2,5-diyl, pyrimidin-2,5-diyl, pyridine-2,5-diyl, or fluorene-2,7-diyl, and in these rings, at least one hydrogen atom is optionally replaced with a fluorine atom, a chlorine atom, an alkyl group having 1 to 12 carbon atoms, an alkoxy group having 1 to 12 carbon atoms, or an alkyl group having 1 to 12 carbon atoms in which at least one hydrogen atom is replaced with a fluorine atom or a chlorine atom;
Z¹ is a single bond, -(CH₂)₂-, -CH=CH-, -C=C-, -COO-, - OCO-, -CF₂O-, -OCF₂-, -CH₂O-, -OCH₂-, or -CF=CF-;
Sp¹ and Sp² are independently a single bond or an alkylene group having 1 to 7 carbon atoms; in this alkylene group, at least one -CH₂- is optionally replaced with -O-, - COO-, or -OCO-, and at least one -(CH₂)₂- is optionally replaced with -CH=CH-; and in these groups, at least one hydrogen atom is optionally replaced with a fluorine atom; and
a is 0, 1, 2, or 3.

10. The liquid crystal device according to claim 8, wherein the polymerizable perpendicular alignment agent is at least one compound selected from compounds represented by General Formula (2): 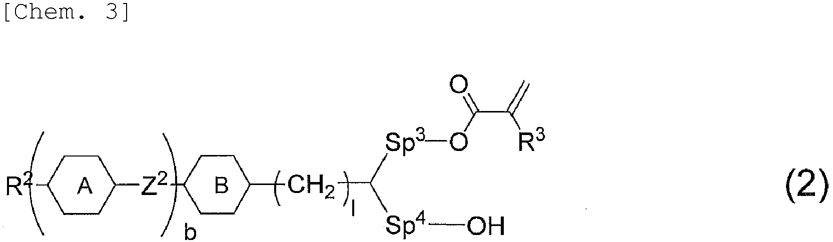 in Formula (2), R² is a hydrogen atom, a halogen atom, an alkyl group having 1 to 12 carbon atoms, an alkoxy group having 1 to 12 carbon atoms, an alkenyl group having 2 to 12 carbon atoms, an alkyl group having 1 to 12 carbon atoms in which at least one hydrogen atom is replaced with a fluorine atom or a chlorine atom, or an alkenyl group having 2 to 12 carbon atoms in which at least one hydrogen atom is replaced with a fluorine atom or a chlorine atom;
R³ is a hydrogen atom or a methyl group;
ring A and ring B are independently 1,4-cyclohexylene, 1,4-phenylene, naphthalene-2,6-diyl, tetrahydropyran-2,5-diyl, 1,3-dioxane-2,5-diyl, pyrimidin-2,5-diyl, pyridine-2,5-diyl, or fluorene-2,7-diyl, and in these rings, at least one hydrogen atom is optionally replaced with a fluorine atom, a chlorine atom, an alkyl group having 1 to 12 carbon atoms, an alkoxy group having 1 to 12 carbon atoms, or an alkyl group having 1 to 12 carbon atoms in which at least one hydrogen atom is replaced with a fluorine atom or a chlorine atom;
Z² is a single bond, -(CH₂)₂-, -CH=CH-, -C=C-, -COO-, - OCO-, -CF₂O-, -OCF₂-, -CH₂O-, -OCH₂-, or -CF=CF-;
Sp³ and Sp⁴ are independently a single bond or an alkylene group having 1 to 7 carbon atoms; in this alkylene group, at least one -CH₂- is optionally replaced with -O-, - COO-, or -OCO-, and at least one -(CH₂)₂- is optionally replaced with -CH=CH-; and in these groups, at least one hydrogen atom is optionally replaced with a fluorine atom;
b is 0, 1, 2, or 3; and 1 is 1, 2, 3, 4, or 5.

11. The liquid crystal device according to claim 8, wherein the polymerizable perpendicular alignment agent is at least one compound selected from compounds represented by General Formula (3): 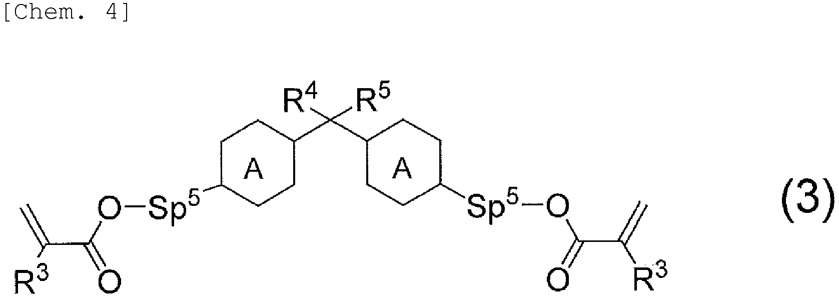 wherein ring A is 1,4-phenylene or naphthalene-2,6-diyl, and in these rings, at least one hydrogen atom is optionally replaced with a fluorine atom, a chlorine atom, an alkyl group having 1 to 12 carbon atoms, an alkoxy group having 1 to 12 carbon atoms, or an alkyl group having 1 to 12 carbon atoms in which at least one hydrogen atom is replaced with a fluorine atom or a chlorine atom;
R⁴ and R⁵ are each independently a hydrocarbon group having 1 to 30 carbon atoms, and R⁴ and R⁵ are optionally connected to form a cyclic structure;
Sp⁵ is a single bond or an alkoxy group having 2 to 12 carbon atoms, and a hydrogen atom of one CH₂ of this alkoxy group is optionally substituted with OH; and
R³ is a hydrogen atom or a methyl group.

12. The liquid crystal device according to any one of claims 8 to 11, wherein the light control layer has a total content of components derived from the polymerizable perpendicular alignment agent and the polymerizable compound (C) in a range of 5 weight% to 50 weight% and a content of the liquid crystal composition (A) in a range of 50 weight% to 95 weight% based on the entire light control layer.

13. The liquid crystal device according to any one of claims 1 to 12, wherein a liquid crystal material contained in the liquid crystal composition (A) has negative dielectric anisotropy.

14. The liquid crystal device according to any one of claims 1 to 13, wherein the liquid crystal composition (A) is a liquid crystal material comprising at least one liquid crystal selected from compounds represented by General Formula (4) as a first component: 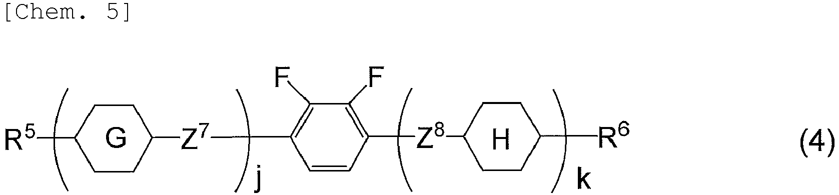 in Formula (4), R⁵ and R⁶ are independently an alkyl group having 1 to 12 carbon atoms, an alkoxy group having 1 to 12 carbon atoms, an alkenyl group having 2 to 12 carbon atoms, an alkenyloxy group having 2 to 12 carbon atoms, or an alkyl group having 1 to 12 carbon atoms in which at least one hydrogen atom is replaced with a fluorine atom or a chlorine atom;
ring G and ring H are independently 1,4-cyclohexylene, 1,4-cyclohexenylene, tetrahydropyran-2,5-diyl, 1,4-phenylene, 1,4-phenylene in which at least one hydrogen atom is replaced with a fluorine atom or a chlorine atom, naphthalene-2,6-diyl, naphthalene-2,6-diyl in which at least one hydrogen atom is replaced with a fluorine atom or a chlorine atom, chroman-2,6-diyl, or chroman-2,6-diyl in which at least one hydrogen atom is replaced with a fluorine atom or a chlorine atom;
Z⁷ and Z⁸ are independently a single bond, ethylene, carbonyloxy, or methyleneoxy;
j is 1, 2, or 3, and k is 0 or 1; and
a sum of j and k is 3 or less.

15. The liquid crystal device according to claim 14, wherein the liquid crystal composition (A) has a proportion of the first component in a range of 20 weight% to 90 weight% based on the entire liquid crystal composition (A).

16. The liquid crystal device according to claim 14 or 15, wherein the liquid crystal composition (A) comprises at least one liquid crystal compound selected from compounds represented by General Formula (5) as a second component thereof: 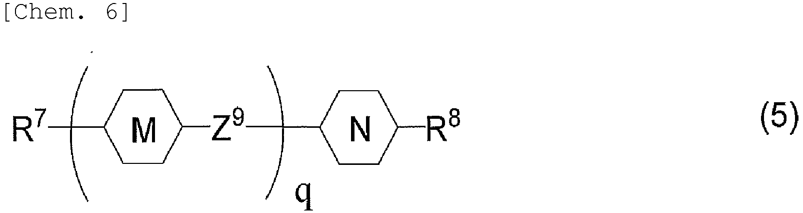 in Formula (5), R⁷ and R⁸ are independently an alkyl group having 1 to 12 carbon atoms, an alkoxy group having 1 to 12 carbon atoms, an alkenyl group having 2 to 12 carbon atoms, an alkyl group having 1 to 12 carbon atoms in which at least one hydrogen atom is replaced with a fluorine atom or a chlorine atom, or an alkenyl group having 2 to 12 carbon atoms in which at least one hydrogen atom is replaced with a fluorine atom or a chlorine atom;
ring M and ring N are independently 1,4-cyclohexylene, 1,4-phenylene, 2-fluoro-1,4-phenylene, or 2,5-difluoro-1,4-phenylene;
Z⁹ is a single bond, ethylene, or carbonyloxy; and
q is 1, 2, or 3.

17. The liquid crystal device according to claim 16, wherein the liquid crystal composition (A) has a proportion of the second component in a range of 10 weight% to 70 weight% based on the entire liquid crystal composition.

18. The liquid crystal device according to any one of claims 1 to 17, wherein the polymerizable compound (C) is at least one selected from the group consisting of compounds represented by Formula (6), Formula (7), and Formula (8): 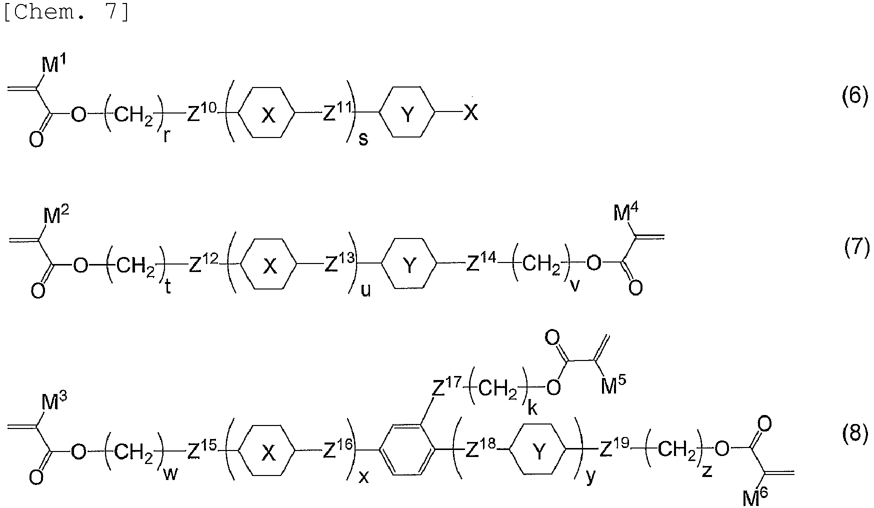 in Formula (6), Formula (7), and Formula (8), ring X and ring Y are independently 1,4-cyclohexylene, 1,4-phenylene, naphthalene-2,6-diyl, tetrahydropyran-2,5-diyl, 1,3-dioxane-2,5-diyl, pyrimidin-2,5-diyl, pyridine-2,5-diyl, or fluorene-2,7-diyl, and in these rings, at least one hydrogen atom is optionally replaced with a fluorine atom, a chlorine atom, an alkyl group having 1 to 12 carbon atoms, an alkoxy group having 1 to 12 carbon atoms, or an alkyl group having 1 to 12 carbon atoms in which at least one hydrogen atom is replaced with a fluorine atom or a chlorine atom;
Z¹⁰, Z¹², Z¹⁴, Z¹⁵, and Z¹⁹ are independently a single bond, -O-, -COO-, -OCO-, or -OCOO-;
Z¹¹, Z¹³, Z¹⁶, and Z¹⁸ are independently a single bond, - OCH₂-, -CH₂O-, -COO-, -OCO-, -COS-, -SCO-, -OCOO-, -CONH-, - NHCO-, -CF₂O-, -OCF₂-, -CH₂CH₂-, -CF₂CF₂-, -CH=CHCOO-, - OCOCH=CH-, -CH₂CH₂COO-, -OCOCH₂CH₂-, -CH=CH-, -N=CH-, -CH=N-, -N=C(CH₃)-, -C(CH₃)=N-, -N=N-, or -C=C-;
Z¹⁷ is a single bond, -O-, or -COO-;
X is a hydrogen atom, a fluorine atom, a chlorine atom, a trifluoromethyl group, a trifluoromethoxy group, a cyano group, an alkyl group having 1 to 20 carbon atoms, an alkenyl group having 2 to 20 carbon atoms, an alkoxy group having 1 to 20 carbon atoms, or an alkoxycarbonyl group having 1 to 20 carbons;
s and u are independently an integer of 1 to 3;
x and y are independently an integer of 0 to 3;
a sum of x and y is 1 to 4;
r, t, w, v, k, and z are independently an integer of 0 to 20; and
M¹ to M⁶ are independently a hydrogen atom or a methyl group.

19. The liquid crystal device according to any one of claims 1 to 18, having a configuration in which the pair of electrodes face each other, with the light control layer being in-between.

20. The liquid crystal device according to any one of claims 1 to 19, wherein the light control layer is interposed between a pair of transparent substrates, and the transparent substrates each have a transparent electrode.

21. The liquid crystal device according to claim 20, wherein the transparent substrates are a glass sheet or an acrylic plate.

22. The liquid crystal device according to claim 20, wherein the transparent substrates are a plastic film.

23. The liquid crystal device according to any one of claims 1 to 22, having a haze rate of 20% or less when no voltage is applied, and a haze rate of 70% or more when voltage is applied.

24. A material for a liquid crystal device according to any one of claims 1 to 18, comprising a polymerizable material comprising:
(A) a liquid crystal composition,
(B) a perpendicular alignment agent, and
(C) at least one polymerizable compound selected from polymer forming monomers and polymer forming oligomers.

25. The material for a liquid crystal device according to claim 24, comprising a photopolymerization initiator.

26. Use of a liquid crystal device according to any one of claims 1 to 19 in a light control element.

27. Use of a liquid crystal device according to any one of claims 20 to 22 in a light control window.

28. Use of a liquid crystal device according to any one of claims 20 to 22 in a smart window.
